# EUROPEAN PATENT SPECIFICATION

(11) **EP 4 424 075 B1**
(45) Date of publication and mention of the grant of the patent: **30.09.2026**
(21) Application number: 22812905.2
(22) Date of filing: 24.10.2022
(51) Int. Cl.: H04W 52/02

(54) **ENHANCED POWER SAVE MODE AND FALLBACK OPERATION THEREOF**
VERBESSERTER ENERGIESPARMODUS UND FALLBACK-BETRIEB DAFÜR
MODE D'ÉCONOMIE D'ÉNERGIE AMÉLIORÉ ET SON FONCTIONNEMENT DE REPLI

(30) Priority: 25.10.2021 US 202163271687 P; 26.10.2021 US 202163271920 P
(43) Date of publication of application: 04.09.2024
(73) Proprietor: Ofinno, LLC, Reston, VA 20190 (US)
(72) Inventor: RYU, Kiseon, Reston, Virginia 20190 (US); KIM, Jeongki, Reston, Virginia 20190 (US); DINAN, Esmael Hejazi, Reston, Virginia 20190 (US)
(74) Representative: Westphal, Mussgnug & Partner, Patentanwälte mbB
(86) International application number: PCT/US2022/047523
(87) International publication number: WO 2023/076137

(56) References cited:
- EP-A1- 3 731 571
- US-A1- 2017 265 130
- US-A1- 2018 110 046

## Description

### TECHNICAL FIELD

This application relates to the field of wireless communication.

### BACKGROUND

With regard to the prior art, reference is made to the published patent applications EP 3 731 571 A1 and US 2017/265130 A1.

### SUMMARY

The invention is set out in the appended claims. Accordingly, a method for a station (STA) of a wireless communication network is described Moreover, a related apparatus, device and system are described.

### BRIEF DESCRIPTION OF THE DRAWINGS

Examples of several of the various embodiments of the present disclosure are described herein with reference to the drawings.
FIG. 1 illustrates example wireless communication networks in which embodiments of the present disclosure may be implemented.
FIG. 2 is a block diagram illustrating example implementations of a station (STA) and an access point (AP).
FIG. 3 illustrates an example of target wake time (TWT) operation.
FIG. 4 illustrates an example of TWT operation in an environment including an AP multi-link device (AP MLD) and a station multi-link device (STA MLD).
FIG. 5 illustrates an example TWT element which may be used to support individual TWT operation.
FIG. 6 illustrates an example TWT element which may be used to support restricted TWT (r-TWT) operation.
FIG. 7 illustrates an example of individual TWT operation.
FIG. 8 illustrates an example of broadcast TWT operation.
FIG. 9 illustrates an example of TWT protection in individual TWT operation.
FIG. 10 illustrates an example of restricted TWT (r-TWT) operation.
FIG. 11 illustrates an example of power save mode operation of a STA.
FIG. 12 illustrates an example of listening for beacon frames by a STA in power save mode.
FIG. 13 illustrates an example of traffic indication map element construction by an AP.
FIG. 14 is an example that illustrates a problem in an existing approach for listening for beacon frames during a power save mode.
FIGs. 15A and 15B illustrate examples of a first capability element which may be sent by a STA and a second capability element which may be sent by an AP.
FIG. 16 illustrates an example of operation of an enhanced power save according to an embodiment.
FIG. 17 illustrates an example of operation of an enhanced power save according to an embodiment.
FIG. 18 illustrates an example of operation of an enhanced power save according to an embodiment.
FIG. 19 illustrates an example of operation of an enhanced power save according to an embodiment.
FIG. 20 illustrates an example process according to an embodiment.
FIG. 21 illustrates another example process according to an embodiment.
FIG. 22 illustrates another example process according to an embodiment.
FIG. 23 illustrates another example process according to an embodiment.
FIG. 24 illustrates another example process according to an embodiment.

### DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope of the appended claims. After reading the description, it will be apparent to one skilled in the relevant art how to implement alternative embodiments. The present embodiments may not be limited by any of the described exemplary embodiments. The embodiments of the present disclosure will be described with reference to the accompanying drawings. Limitations, features, and/or elements from the disclosed example embodiments may be combined to create further embodiments within the scope of the appended claims. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a station, an access point, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, may be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {STA1, STA2} are: {STA1}, {STA2}, and {STA1, STA2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages/frames comprise a plurality of parameters, it implies that a parameter in the plurality of parameters is in at least one of the one or more messages/frames but does not have to be in each of the one or more messages/frames.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g. hardware with a biological element) or a combination thereof, which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

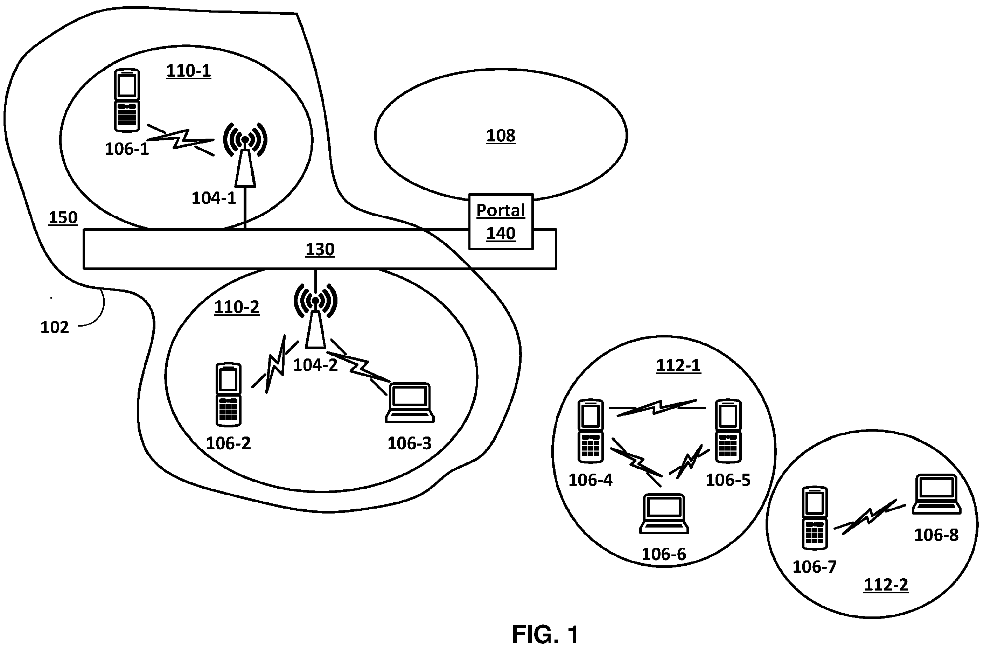

FIG. 1 illustrates example wireless communication networks in which embodiments of the present disclosure may be implemented.

As shown in FIG. 1, the example wireless communication networks may include an Institute of Electrical and Electronic Engineers (IEEE) 802.11 (WLAN) infra-structure network 102. WLAN infra-structure network 102 may include one or more basic service sets (BSSs) 110 and 120 and a distribution system (DS) 130.

BSS 110-1 and 110-2 each includes a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS perform an association procedure to communicate with each other..

DS 130 may be configured to connect BSS 110-1 and BSS 110-2. As such, DS 130 may enable an extended service set (ESS) 150. Within ESS 150, APs 104-1 and 104-2 are connected via DS 130 and may have the same service set identification (SSID).

WLAN infra-structure network 102 may be coupled to one or more external networks. For example, as shown in FIG. 1, WLAN infra-structure network 102 may be connected to another network 108 (e.g., 802.X) via a portal 140. Portal 140 may function as a bridge connecting DS 130 of WLAN infra-structure network 102 with the other network 108.

The example wireless communication networks illustrated in FIG. 1 may further include one or more ad-hoc networks or independent BSSs (IBSSs). An ad-hoc network or IBSS is a network that includes a plurality of STAs that are within communication range of each other. The plurality of STAs are configured so that they may communicate with each other using direct peer-to-peer communication (i.e., not via an AP).

For example, in FIG. 1, STAs 106-4, 106-5, and 106-6 may be configured to form a first IBSS 112-1. Similarly, STAs 106-7 and 106-8 may be configured to form a second IBSS 112-2. Since an IBSS does not include an AP, it does not include a centralized management entity. Rather, STAs within an IBSS are managed in a distributed manner. STAs forming an IBSS may be fixed or mobile.

A STA as a predetermined functional medium may include a medium access control (MAC) layer that complies with an IEEE 802.11 standard. A physical layer interface for a radio medium may be used among the APs and the non-AP stations (STAs). The STA may also be referred to using various other terms, including mobile terminal, wireless device, wireless transmit/receive unit (WTRU), user equipment (UE), mobile station (MS), mobile subscriber unit, or user. For example, the term "user" may be used to denote a STA participating in uplink Multi-user Multiple Input, Multiple Output (MU MIMO) and/or uplink Orthogonal Frequency Division Multiple Access (OFDMA) transmission.

A physical layer (PHY) protocol data unit (PPDU) may be a composite structure that includes a PHY preamble and a payload in the form of a PHY service data unit (PSDU). For example, the PSDU may include a PHY preamble and header and/or one or more MAC protocol data units (MPDUs). The information provided in the PHY preamble may be used by a receiving device to decode the subsequent data in the PSDU. In instances in which PPDUs are transmitted over a bonded channel (channel formed through channel bonding), the preamble fields may be duplicated and transmitted in each of the multiple component channels. The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The format of, coding of, and information provided in the non-legacy portion of the preamble is based on the particular IEEE 802.11 protocol to be used to transmit the payload.

A frequency band may include one or more sub-bands or frequency channels. For example, PPDUs conforming to the IEEE 802.11n, 802.11ac, 802.11ax and/or 802.11be standard amendments may be transmitted over the 2.4 GHz, 5 GHz, and/or 6 GHz bands, each of which may be divided into multiple 20 MHz channels. The PPDUs may be transmitted over a physical channel having a minimum bandwidth of 20 MHz. Larger channels may be formed through channel bonding. For example, PPDUs may be transmitted over physical channels having bandwidths of 40 MHz, 80 MHz, 160 MHz, or 320 MHz by bonding together multiple 20 MHz channels.

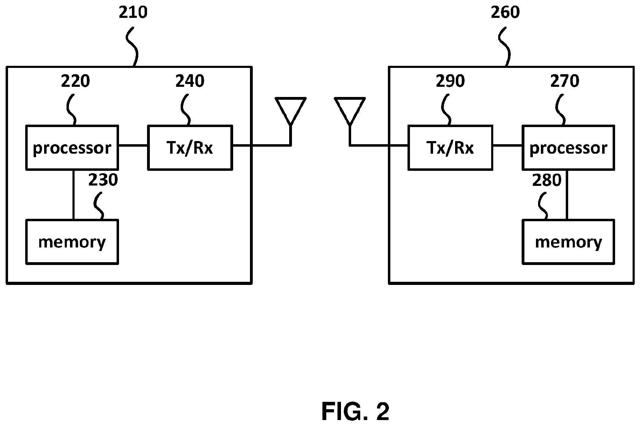

FIG. 2 is a block diagram illustrating example implementations of a STA 210 and an AP 260.

As shown in FIG. 2, STA 210 may include at least one processor 220, a memory 230, and at least one transceiver 240. AP 260 may include at least one processor 270, memory 280, and at least one transceiver 290. Processor 220/270 may be operatively connected to transceiver 240/290.

Transceiver 240/290 may be configured to transmit/receive radio signals. In an embodiment, transceiver 240/290 may implement a PHY layer of the corresponding device (STA 210 or AP 260).

In an embodiment, STA 210 and/or AP 260 may be a multi-link device (MLD), that is a device capable of operating over multiple links as defined by the IEEE 802.11be standard amendment. As such, STA 210 and/or AP 260 may each have multiple PHY layers. The multiple PHY layers may be implemented using one or more of transceivers 240/290.

Processor 220/270 may implement functions of the PHY layer, the MAC layer, and/or the logical link control (LLC) layer of the corresponding device (STA 210 or AP 260).

Processor 220/270 and/or transceiver 240/290 may include application specific integrated circuit (ASIC), other chipset, logic circuit and/or data processor. Memory 230/280 may include read-only memory (ROM), random access memory (RAM), flash memory, memory card, storage medium and/or other storage unit.

When the embodiments are executed by software, the techniques (or methods) described herein can be executed with modules (e.g., processes, functions, and so on) that perform the functions described herein. The modules can be stored in memory 230/280 and executed by processor 220/270. Memory 230/280 may be implemented (or positioned) within processor 220/270 or external to processor 220/270. Memory 230/280 may be operatively connected to processor 220/270 via various means known in the art.

Target wake time (TWT), a feature introduced in the IEEE 802.11ah standard, allows STAs to manage activity in the BSS by scheduling STAs to operate at different times to reduce contention. TWTs may allow STAs to reduce the required amount of time that a STA utilizing a power management mode may be awake. TWTs may be individual TWTs or broadcast TWTs. Individual TWTs follow a negotiated TWT agreement between STAs. Broadcast TWTs are based on a schedule set and provided to STAs by an AP.

In an individual TWT, a STA that requests a TWT agreement is called a TWT requesting STA. The TWT requesting STA may be a non-AP STA for example. The STA that responds to the request is called a TWT responding STA. The TWT responding STA may be an AP for example. The TWT requesting STA is assigned specific times to wake up and exchange frames with the TWT responding STA. The TWT requesting STA may communicate wake scheduling information to the TWT responding STA. The TWT responding STA may transmit TWT values to the TWT requesting STA when a TWT agreement is established between them.

When explicit TWT is employed, the TWT requesting STA may wake up and perform a frame exchange. The TWT requesting STA may receive a next TWT information in a response from the TWT responding STA. When implicit TWT is used, the TWT requesting STA may calculate a next TWT by adding a fixed value to the current TWT value.

The TWT values for implicit TWT may be periodic. The TWT requesting STA operating with an implicit TWT agreement may determine a next TWT service period (TWT SP) start time by adding a value of a TWT wake interval associated with the TWT agreement to the value of the start time of the current TWT SP. The TWT responding STA may include the start time for a series of TWT SPs corresponding to a single TWT flow identifier of an implicit TWT agreement in a target wake time field of a TWT element. The TWT element may contain a value of 'accept TWT' in a TWT setup command field. The start time of the TWT SP series may indicate the start time of a first TWT SP in the series. Start times of subsequent TWT SPs may be determined by adding the value of the TWT wake interval to the start time of the current TWT SP. In an example, the TWT requesting STA, awake for an implicit TWT SP, may enter a doze state after the TWT SP has elapsed or after receiving an end of service period (EOSP) field equal to 1 from the TWT responding STA, whichever occurs first.

A TWT session may be negotiated between an AP and a STA. The TWT session may configure a TWT SP of DL and UL traffic between the AP and the STA. Expected traffic may be limited within the negotiated SP. The TWT SP may start at a specific time. The TWT SP may run for a SP duration. The TWT SP may repeat every SP interval.

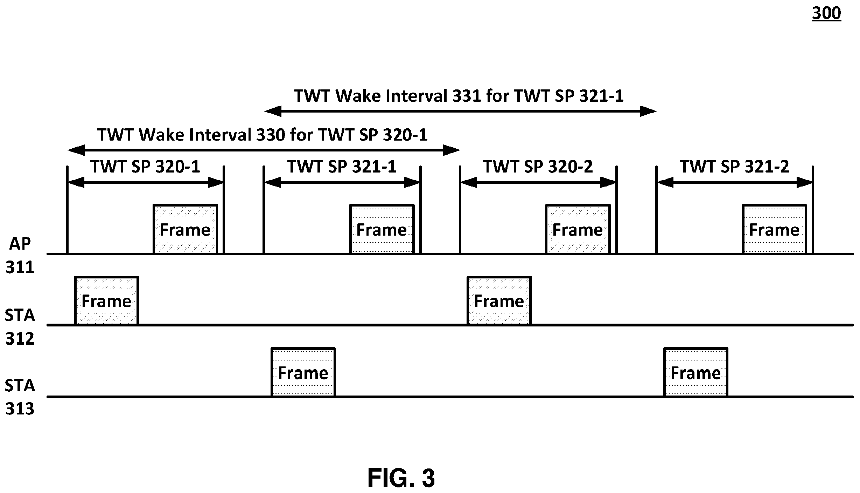

FIG. 3 illustrates an example 300 of TWT operation. As shown in FIG. 3, example 300 includes an AP 311, a STA 312, and a STA 313. AP 311 and STA 312 may establish a TWT SP 320. AP 311 and STA 313 may establish a TWT SP 321. TWT SP 320 and TWT SP 321 may repeat as shown in FIG. 3, such that TWT SP 320 may include a first TWT SP 320-1 and a second TWT SP 320-2, and such that TWT SP 321 may include a first TWT SP 321-1 and a second TWT SP 321-2.

AP 311 and STA 312 may exchange frames during first TWT SP 320-1. STA 312 may enter a doze state at the end of TWT SP 320-1 and may remain in the doze state until the start of second TWT SP 320-2. The start of second TWT SP 320-2 may be indicated by a TWT wake interval 330 associated with TWT SP 320. AP 311 and STA 312 may again exchange frames during second TWT SP 320-2.

Similarly, AP 311 and STA 313 may exchange frames during first TWT SP 321-1. STA 313 may enter a doze state at the end of first TWT SP 321-1 and may remain in the doze state until the start of second TWT SP 321-2. The start of second TWT SP 321-2 may be indicated by a TWT wake interval 331 associated with TWT SP 321. AP 311 and STA 313 may again exchange frames during second TWT SP 31-2.

In an awake state, a STA may be fully powered. The STA may transmit and/or receive a frame to/from an AP or another STA. In a doze state, a STA may not transmit and may not receive a frame to/from an AP or another STA.

An MLD is an entity capable of managing communication over multiple links. The MLD may be a logical entity and may have more than one affiliated station (STA). The MLD may have a single MAC service access point (MAC-SAP) to the LLC layer, which includes a MAC data service. An MLD may be an access point MLD (AP MLD) when a STA affiliated with the MLD is an AP STA (or an AP). An MLD may be a non-access point MLD (non-AP MLD) or STA MLD when a STA affiliated with the MLD is a non-AP STA (or a STA).

During negotiation of TWT agreements, a TWT requesting STA affiliated with a STA MLD and a TWT responding STA affiliated with an AP MLD may communicate multiple TWT elements. The TWT elements may comprise link ID bitmap subfields indicating different link(s) in a TWT setup frame. The TWT parameters provided by a TWT element may be applied to the respective link that is indicated in the TWT element.

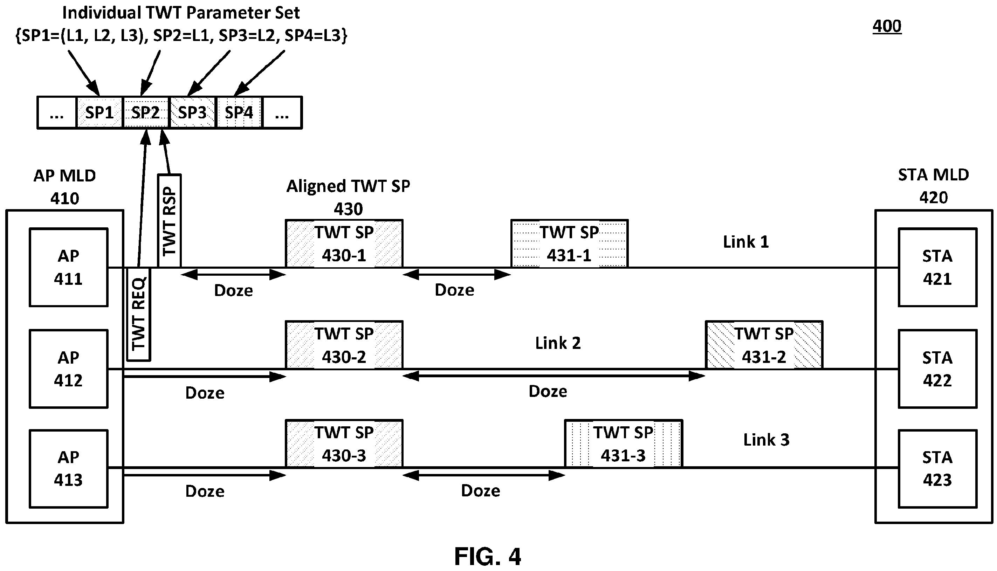

FIG. 4 illustrates an example 400 of TWT operation in a multi-link environment including an AP multi-link device (AP MLD) 410 and a STA multi-link device (STA MLD) 420. As shown in FIG. 4, AP MLD 410 may have three affiliated APs, AP 411, AP2 412, and AP3 413. In an example, AP 411, AP2 412, and AP3 413 may operate respectively on the 2.4 GHz band, the 5 GHz band, and the 6 GHz band. STA MLD 420 may have three affiliated STAs, STA 421, STA 422, and STA 423. In an example, STA 421, STA 422, and STA 423 may operate respectively on the 2.4 GHz band, the 5 GHz band, and the 6 GHz band. In an example, AP 411, AP2 412, and AP3 413 may be communicatively coupled via a first link (link 1), a second link (link 2), and a third link (link 3) respectively with STA 421, STA 422, and STA 423, respectively.

In an example, STA 421 may transmit a TWT request to AP 411. The TWT request may include three TWT elements. Each TWT element may indicate a respective link of links 1-3 and may request the setup of a TWT agreement for the indicated link. The three TWT elements may have different TWT parameters, such as target wake time (TWT). In response to the TWT request, AP 411 may transmit a TWT response to STA 421. The TWT response may include three TWT elements. Each TWT element may indicate a respective link of links 1-3 and may include a value of 'accept TWT' in a TWT setup command field.

Successful TWT agreement setup on links 1-3 establishes three TWT SPs with same or different TWT parameters on links 1-3 respectively. The target wake time field of the TWT element indicating a given link indicates the start time of the TWP SP for that link. The starting time may be indicated in reference to a time synchronization function (TSF) time of the link.

In example 400, initial TWT SPs 430-1, 430-2, and 430-3 of links 1-3 respectively may be aligned. TWT wake intervals associated with the TWT agreements of links 1-3 respectively may be set differently. As such, second TWT SPs 431-1, 431-2, and 431-3 of links 1-3 respectively may not be aligned. STA 421, STA 422, and STA 423 may enter a doze state between the end of initial TWT SPs 430-1, 430-2, and 430-3, respectively, and the start of second TWT SPs 431-1, 431-2, 431-3, respectively.

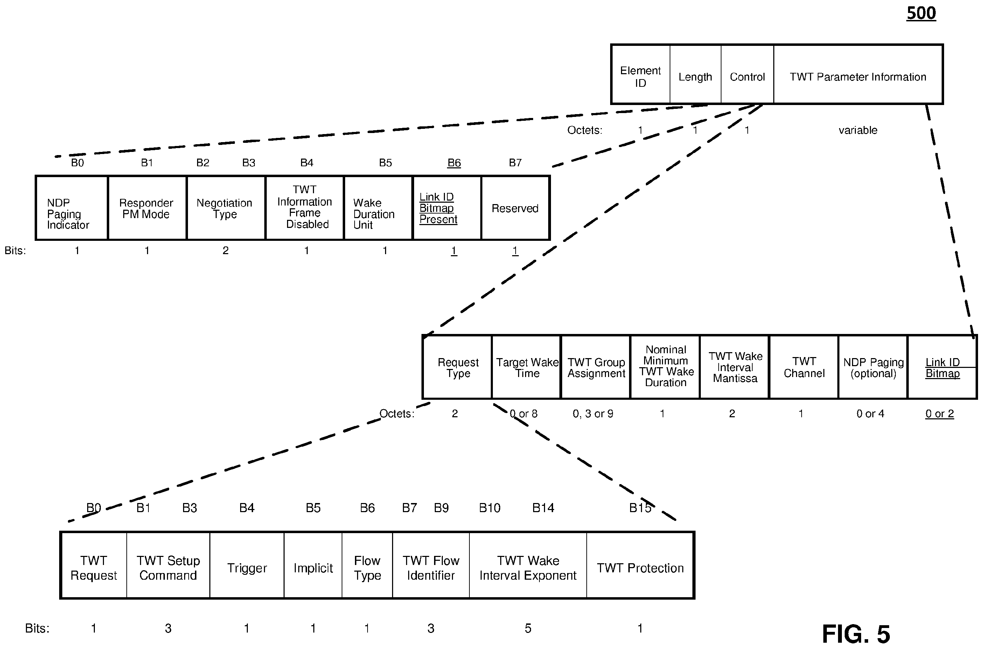

FIG. 5 illustrates an example target wake time (TWT) element 500 which may be used to support individual TWT operation.

In an example, an AP and a STA may use TWT element 500 to negotiate a TWT agreement. The AP and/or the STA may transmit TWT element 500 in an individually addressed management frame. The management frame may be of the type action, action no ack, (re)association request/response, and probe request response, for example.

The TWT schedule and parameters may be provided during a TWT setup phase. Renegotiation/changes of TWT schedules may be signaled via individually addressed frames that contain the updated TWT schedule/parameters. The frames may be management frames as described above or control or data frames that carry a field containing the updated TWT schedule/parameters.

Referring to FIG. 5, TWT element 500 includes an element ID field, a length field, a control field, and a TWT parameter information field.

The element ID field (e.g., 1 octet in length) may indicate that information element 500 is a TWT element. The length field (e.g., 1 octet) may indicate the length of TWT element 500 starting from the control field until an end of TWT element 500. The end of TWT element 500 may be the end of a TWT Channel field or the end of a Link ID bitmap field of the TWT parameter information field.

The TWT parameter information field may include a request type field (e.g., 2 octets), a target wake time field (e.g., 8 octets or less), a TWT group assignment field (e.g., 9, 3, 2, or 0 octets), a nominal minimal TWT wake duration field (e.g., 1 octet), a TWT wake interval mantissa (e.g., 2 octets), a TWT channel field (e.g., 1 octet), an optional NDP paging field (e.g., 0 or 4 octets), and/or a Link ID bitmaps field (e.g., 0 or 2 Octets ).

The request type field may indicate a type of TWT request. The request type field may include a TWT request field (e.g., 1 bit), a TWT setup command field (e.g., 3 bits), a trigger field (e.g., 1 bit), an implicit field (e.g., 1 bit), a flow type (e.g., 1 bit), a TWT flow identifier (e.g., 3 bits), a TWT wake interval exponent (e.g., 5 bits), and/or a TWT protection field (e.g., 1 bit).

The TWT request field may indicate whether the TWT element 500 represents a request. If TWT request field has a value of 1, then the TWT element 500 may represent a request to initiate TWT scheduling/setup.

The TWT setup command field may indicate a type of TWT command. In a TWT request, the type of TWT command indicated may be: a request TWT (the TWT responding STA specifies the TWT value; e.g., field set to 0), a suggest TWT (the TWT requesting STA suggests a TWT value; e.g., field set to 1), and a demand TWT (the TWT requesting STA demands a TWT value; e.g., field set to 2).

In a TWT response, the type of TWT command indicated may be: TWT grouping (the TWT responding STA suggests TWT group parameters that are different than the suggested or demanded TWT parameters of the TWT requesting STA; e.g., field set to 3), accept TWT (the TWT responding STA accepts the TWT request with the TWT parameters indicated by the TWT requesting STA; e.g. field set to 4), alternate TWT (the TWT responding STA suggests TWT parameters that are different than the parameters suggested or demanded by the TWT requesting STA; e.g., field set to 5), dictate TWT (the TWT responding STA demands TWT parameters that are different than the parameters suggested or demanded by the TWT requesting STA; e.g., field set to 6), or reject TWT (the TWT responding STA rejects the TWT setup; e.g. field set to 7).

In a TWT response, the TWT command may also indicate an unsolicited response or a broadcast TWT. An unsolicited TWT response is an individually addressed frame that is intended for a specific STA. An unsolicited TWT response may be followed by an ACK frame from the STA receiving the unsolicited TWT response. A broadcast TWT may be intended for multiple STAs and may be carried in a broadcast frame such as, for example, a beacon frame. A broadcast TWT may not be acknowledged by receiving STAs.

An unsolicited TWT response may be used a TWT responding STA to demand that a recipient follow a TWT schedule contained in the TWT element. In an embodiment, an unsolicited TWT response may have the TWT request field set to 0 and a value of 'dictate TWT' in the TWT setup command field. A broadcast TWT response may be used by a TWT responding STA to schedule a TWT for any STA that receives and decodes the TWT element.

In certain embodiments, a TWT element, such as TWT element 500, may contain TWT parameter sets for multiple TWT negotiations or indications as described herein. As such, the TWT element may include multiple instances of the Control and the TWT parameter information fields. The TWT flow identifier of the request type field indicates the TWT negotiation which parameters are carried by the TWT parameter information field.

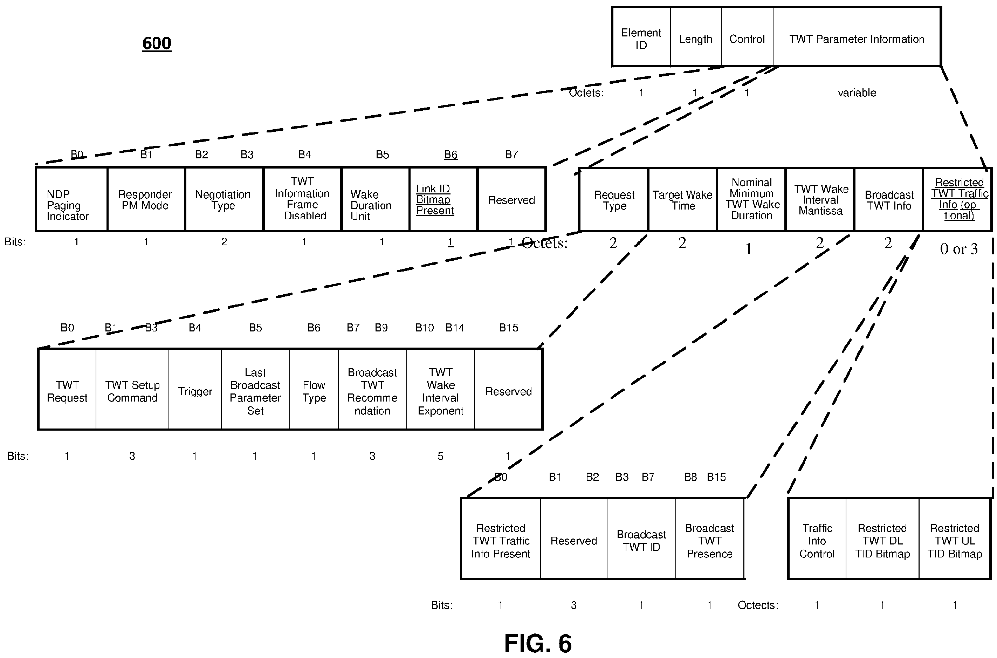

FIG. 6 illustrates an example target wake time (TWT) element 600 which may be used to support restricted TWT (r-TWT) operation. For r-TWT, TWT element 600 may be transmitted in a broadcast management frame, which can be a beacon frame, a TIM broadcast frame, a probe response frame, etc. In this embodiment, TWT element 600 provides non-negotiated TWT schedules (e.g., broadcast TWT schedules).

As shown, TWT element 600 includes an element ID field, a length field, a control field, and a TWT parameter information field.

The element ID field (e.g., 1 octet in length) may indicate that information element 600 is a TWT element. The length field (e.g., 1 octet) may indicate the length of TWT element 600 starting from the control field until an end of TWT element 600. The end of TWT element 600 may be the end of a broadcast TWT info field or the end of a r-TWT traffic info field of the TWT parameter information field.

The TWT parameter information field may include a request type field, a target wake time field (e.g., 2 octets), a nominal minimal TWT wake duration field (e.g., 1 octet), a TWT wake interval mantissa (e.g., 2 octets), a broadcast TWT info field (e.g., 2 octets), and an optional r-TWT traffic info field (e.g., 0 or 3 octets).

The request type field may include, among other fields, a TWT request field, a flow type field, and a TWT wake interval exponent field.

The TWT request field indicates whether TWT element 600 is a request. If the TWT request field has a value of 0, then TWT element 600 may represent a response to a request to initiate TWT scheduling/setup (solicit TWT), an unsolicited TWT response, and/or a broadcast TWT message.

The TWT wake interval represents the average time that a TWT requesting STA or a TWT scheduled STA expects to elapse between successive TWT SP start times of a TWT schedule. The TWT wake interval exponent field indicates a (base 2) exponent used to calculate the TWT wake interval in microseconds. In an embodiment, the TWT wake interval is equal to: (TWT wake interval mantissa) × 2^{(TWT Wake Interval Exponent)}. The TWT wake interval mantissa value is indicated in microseconds, base 2 in a TWT wake interval mantissa field of the TWT parameter information field.

The nominal minimum TWT wake duration field may indicate the minimum amount of time (in the unit indicated by a wake duration unit subfield of the control field) that a TWT requesting STA or a TWT scheduled STA is expected to be awake to complete frame exchanges for the period of the TWT wake interval.

The flow type field, in a TWT response that successfully set up a TWT agreement between a TWT requesting STA and a TWT responding STA, may indicate a type of interaction between the TWT requesting STA and the TWT responding STA within a TWT SP of the TWT agreement. A flow type field equal to 0 may indicate an announced TWT. In an announced TWT, the TWT responding STA may not transmit a frame to the TWT requesting STA within a TWT SP until the TWT responding STA receives a PS-Poll frame or a QoS Null frame from the TWT requesting STA. A flow type field equal to 1 may indicate an unannounced TWT. In an unannounced TWT, the TWT responding STA may transmit a frame to the TWT requesting STA within a TWT SP before it has received a frame from the TWT requesting STA.

Within a TWT element that includes a TWT setup command value of 'request TWT', 'suggest TWT', or 'demand TWT', a broadcast TWT ID may indicate a specific broadcast TWT in which the TWT requesting STA is requesting to participate. Within a TWT element that includes a TWT setup command value of 'accept TWT', 'alternate TWT', 'dictate TWT', or 'reject TWT', a broadcast TWT ID may indicate a specific broadcast TWT for which the TWT responding STA is providing TWT parameters. The value 0 in the broadcast TWT ID subfield may indicate the broadcast TWT whose membership corresponds to all STAs that are members of the BSS corresponding to the BSSID of the management frame carrying the TWT element and that is permitted to contain trigger frames with random access resource units for unassociated STAs. The Broadcast TWT ID subfield in a r-TWT Parameter set field is always set to a nonzero value.

A broadcast TWT element 600 that contains a r-TWT parameter set is also referred to as a r-TWT element. A r-TWT traffic info present subfield of the broadcast TWT info field may be set to 1 to indicate the presence of the r-TWT traffic info field in TWT element 600. The r-TWT traffic info field is present in a r-TWT parameter set field when the r-TWT traffic info present subfield is set to 1.

The r-TWT traffic info field may include a traffic info control field, a r-TWT DL TID bitmap field, and a r-TWT UL TID bitmap field.

The traffic info control field may include a DL TID bitmap valid subfield and an UL TID bitmap valid subfield. The DL TID bitmap valid subfield indicates if the r-TWT DL TID bitmap field has valid information. When the value of the DL TID bitmap valid subfield is set to 0, it may indicate that DL traffic of TIDs is identified as latency sensitive traffic, and the r-TWT DL TID bitmap field is reserved. The UL TID bitmap valid subfield may indicate if the r-TWT UL TID bitmap field has valid information. When the value of the UL TID bitmap valid subfield is set to 0, it may indicate that UL traffic of TIDs is identified as latency sensitive traffic, and the r-TWT UL TID bitmap field is reserved.

The r-TWT DL TID bitmap subfield and the r-TWT UL TID bitmap subfield may specify which TID(s) are identified by the TWT scheduling AP or the TWT scheduled STA as latency sensitive traffic streams in a downlink and a uplink direction, respectively. A value of 1 at bit position k in the bitmap indicates that TID k is classified as a latency sensitive traffic stream. A value of 0 at bit position k in the bitmap indicates that TID k is not classified as a latency sensitive traffic stream.

An individual target wake time (TWT) may be a specific time or set of times negotiated between two individual stations (e.g., a STA and another STA, or a STA and an AP, etc.) at which the stations may be awake to exchange frames during a service period (SP) of the TWT.

In trigger-enabled TWT, an AP may transmit a trigger frame for scheduling uplink multi-user transmissions from one or more STAs using uplink OFDMA (orthogonal frequency division multiple access) and/or uplink MU-MIMO (multi-user multiple input multiple output) during a trigger-enabled (TE) TWT SP. A TWT STA that receives the trigger frame from the AP may transmit a frame to the AP through a resource indicated in the trigger frame during the TE TWT SP.

In non-trigger-enabled TWT, an AP may not be required to transmit a trigger frame to schedule uplink multi-user transmissions from one or more STAs during a non-trigger-enabled TWT SP.

In announced TWT, a STA may transmit a frame (e.g., a PS-Poll frame or a QoS null frame) to the AP to retrieve a downlink buffered data from the AP during a TWT SP. In unannounced TWT, an AP may transmit downlink data to a TWT STA without receiving a frame (e.g., a PS-Poll frame, or a QoS null frame) from the TWT STA during a TWT SP.

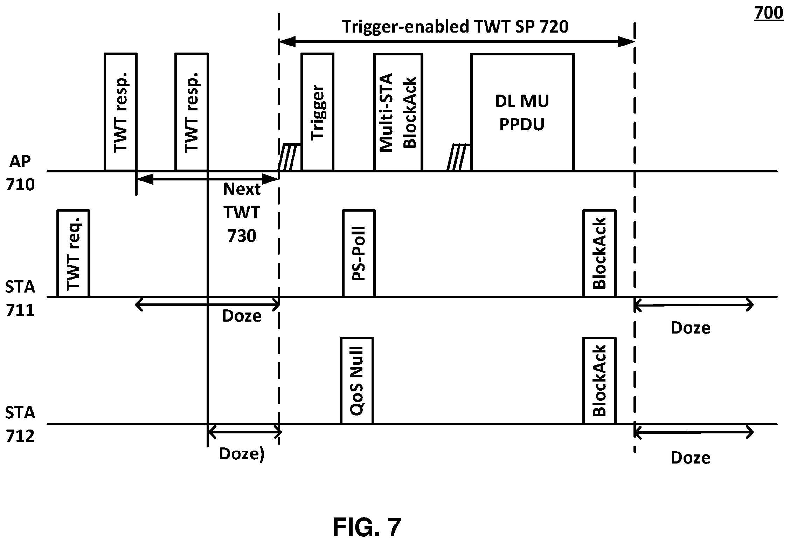

FIG. 7 illustrates an example 700 of individual TWT operation. As shown in FIG. 7, example 700 includes an AP 710, a STA 711, and a STA 712. In an example, AP 710 may be a TWT responding STA and STA 711 and STA 712 may be TWT requesting STAs.

In an example, STA 711 may transmit a TWT request to AP 710 to setup a first trigger-enabled TWT agreement. STA 711 may set a trigger field of the TWT request to 1 to indicate that it is requesting a trigger-enabled TWT. AP 710 may accept the first TWT agreement with STA 711. AP 710 may confirm the acceptance in a TWT response sent to STA 711. The TWT response may indicate a next TWT 730, which indicates the time until a next TWT SP 720 according to the first TWT agreement.

In an example, AP 710 may transmit an unsolicited TWT response to STA 712 to set up a second trigger-enabled TWT agreement with STA 712 without receiving a TWT request from STA 712. The first and second TWT agreements may be set up as announced TWTs.

After the setup of the TWT agreements, STA 711 and STA 712 may enter a doze state until the start of TWT SP 720. During TE TWT SP 720, AP 710 may transmit a trigger frame. STA 711 and STA 12 may respond to the trigger frame by indicating that they are in awake state. In an example, STA 711 may transmit a power save poll (PS-Poll) frame. The PS-Poll frame may comprise a BSSID (receiver address: RA) field set to an address of AP 710 and a transmitter address (TA) field set to an address of STA 711. In an example, STA 712 may transmit a QoS null frame in response to the trigger frame. The QoS null frame may comprise a MAC header (e.g., a frame control field, a duration field, address fields, a sequence control field, QoS control field) without a frame body.

In response to the PS-Poll frame and the QoS null frame, AP 710 may transmit a multi-STA Block Ack (M-BA) frame. The M-BA frame may include acknowledgement information associated with the PS-Poll frame and the QoS null frame received from STAs 711 and 712 respectively. Subsequently, STA 711 and STA 712 may receive downlink bufferable units (DL BUs) from AP 710. The DL BUs may include a medium access control (MAC) service data unit (MSDU), an aggregate MAC service data unit (A-MSDU), and/or a bufferable MAC management protocol data unit (MMPDU). STA 711 and STA 712 may transmit Block Ack (BA) frames in response to the DL BUs. At the end of the TWT SP 720, STA 711 and STA 712 may return to a doze state.

A STA may execute individual TWT setup exchanges. The STA may not transmit frames to an AP outside of negotiated TWT SPs. The STA may not transmit frames that are not contained within high efficiency trigger-based physical protocol data units (HE TB PPDUs) to the AP within TE TWT SPs. A HE TB PPDU may be transmitted by a STA based on receiving a trigger frame triggering uplink multi-user transmissions.

The AP of a trigger-enabled TWT agreement may schedule for transmission a trigger frame for a STA within the TE TWT SP. The STA may transmit an HE TB PPDU as a response to the trigger frame sent during the TE TWT SP. A STA that is in power save (PS) mode may include a PS-Poll frame or a QoS null frame in the HE TB PPDU if the TWT is an announced TWT, to indicate to the AP that the STA is currently in the awake state. The AP that receives the PS-Poll frame or the QoS Null frame or any other indication from a STA in PS mode, may deliver to the STA as many buffered BUs as are available at the AP during the TWT SP.

A broadcast target wake time (TWT) may be a specific time or set of times broadcast by an AP to one or more STAs at which the STAs may be awake to exchange frames with the AP during a SP of the TWT.

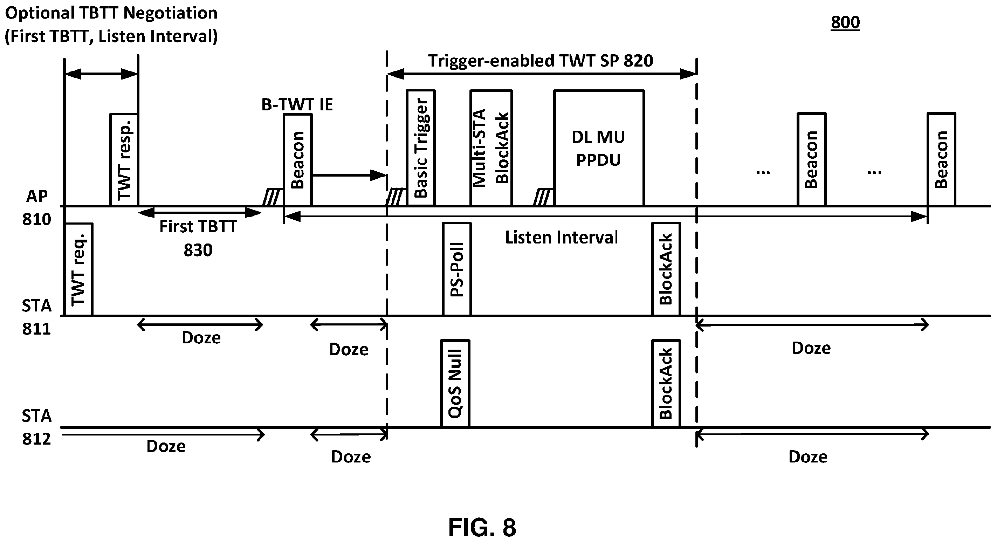

FIG. 8 illustrates an example 800 of broadcast TWT operation. As shown in FIG. 8, example 800 includes an AP 810, a STA 811, and a STA 812. In an example 800, AP 810 may be a TWT scheduling AP and STA 811 and STA 812 may be TWT scheduled STAs.

In an example, AP 810 may include a broadcast TWT element in a beacon frame that indicates a broadcast TWT SP 820. During the broadcast TWT SP 820, AP 810 may transmit trigger frames or DL BUs to STA 811 and STA 812. Beacon frames may be sent by AP 810 at a regular interval defined as the target beacon transmission time (TBTT). The TBTT is a time interval measured in time units (TUs). A TU is equal to 1024 microseconds.

In an example, STA 811 and STA 812 may enter a doze state until the first target beacon transmission time (TBTT). STA 811 and STA 812 may wake up to receive the beacon frame at the first TBTT to determine the broadcast TWT. Upon reception of a broadcast TWT element in a beacon frame, STA 811 and STA 812 may re-enter the doze state until the start of TE TWT SP 820.

During TE TWT SP 820, AP 810 may transmit a basic trigger frame to STA 811 and STA 812. STA 811 may indicate that it is awake by transmitting a PS-Poll, and STA 812 may indicate that it is awake by transmitting a QoS null frame in response to the basic trigger frame. Subsequently, STA 811 and STA 812 may receive DL BUs from AP 810. STA 811 and STA 812 may return to the doze state outside of the TWT SP 720.

In an example, a STA that intends to operate in power save mode may negotiate a wake TBTT and a wake interval with the AP. For example, as shown in FIG. 8, STA 811 may transmit a TWT request to AP 810 that identifies a wake TBTT of the first beacon frame and a wake interval between subsequent beacon frames. AP 810 may respond with a TWT response to the TWT request confirming the wake TBTT and wake interval. After successfully completing the negotiation, STA 811 may enter a doze state until a first negotiated wake TBTT 830. STA 811 may be in an awake state to listen to the beacon frame transmitted at first negotiated wake TBTT 830. If STA 811 receives a beacon frame from AP 810 at or after TBTT 830, STA 811 may return to the doze state until the next wake TBTT unless a traffic indication map (TIM) element in a beacon frame includes a positive indication for STA 811. The STA 811 may return to the doze state after a nominal minimum TBTT wake duration time has elapsed from the TBTT start time.

A Network Allocation Vector (NAV) is an indicator, maintained by a station (STA), of time periods when transmission onto the wireless medium (WM) may not be initiated by the STA regardless of whether the clear channel assessment (CCA) function of the STA senses that the WM is busy. A STA that receives at least one valid frame in a PSDU may update its NAV with the information from any valid duration field in the PSDU. The STA may update the NAV when a value of the received duration field is greater than the current NAV value of the STA.

A TWT protection is a mechanism employed to protect a TWT session from external STA transmissions. During a TWT SP configured to protect the TWT session, a STA that initiates a transmission opportunity (TXOP) to transmit a frame may transmit a request to transmit (RTS) frame or a clear to transmit (CTS) frame to protect the TWT session by setting the NAV of other STAs based on receiving of the RTS frame and/or the CTS frame. The RTS frame may comprise a frame control field, a duration field, a receiver address (RA) field, a transmitter address (TA) field, and a frame check sequence (FCS) field. The CTS frame may comprise a frame control field, a duration field, a receiver address (RA) field, and a frame check sequence (FCS) field.

The TWT protection field in a TWT element may indicate whether a TWT is protected or unprotected. A TWT requesting STA may set the TWT protection field to 1 to request the TWT responding STA to provide protection for the set of TWT SPs. A TWT protection field equal to 1 may indicate to use a NAV protection mechanism to protect access to the medium during the corresponding TWT SPs.

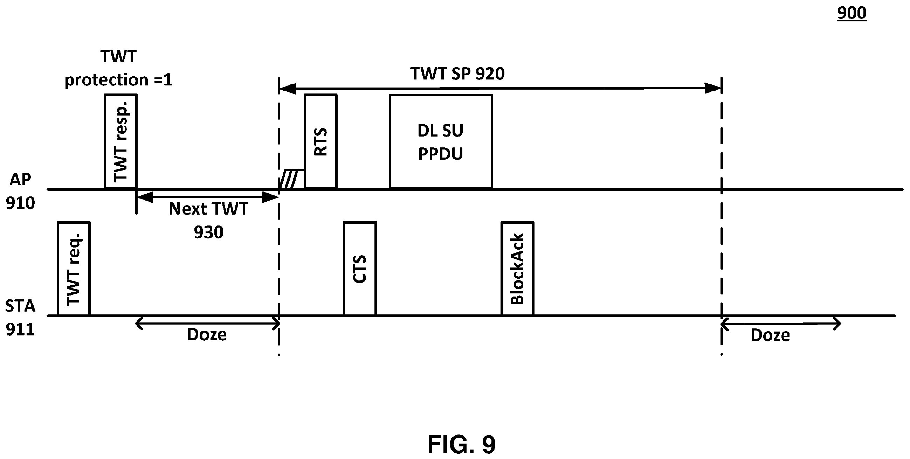

FIG. 9 illustrates an example 900 of TWT protection in individual TWT operation. As shown in FIG. 9, example 900 includes an AP 910 and a STA 911.

In an example, AP 910 may set the TWT protection field to 1 in a TWT response frame to protect the TWT SPs using a NAV protection mechanism. Upon reception of the TWT response frame, STA 911 may enter a doze state until the next TWT 930. AP 910 that has set the TWT protection field to 1 may transmit a NAV setting frame at the start of the TWT SP 920. For example, the NAV setting frame may be an RTS frame or a CTS frame.

A STA that receives the NV setting frame and that is not scheduled to access the medium during the TWT SP 920 may set their NAV according to the NAV setting frame. The STA may not access the medium for the specified amount of time in the NAV setting frame.

STA 911 may be scheduled to access the medium during the TWT SP 920. STA 911 may respond to the RTS frame with a CTS frame. Upon receiving the CTS frame, AP 910 may transmit a downlink frame to STA 911. STA 911 may respond to the downlink frame with a BA frame. When the TWT SP 920 ends, STA 911 may return to the doze state.

Traffic originating from many real time applications may have stringent latency requirements (e.g., very low average latency, worst-case latency on the order of a few to tens of milliseconds, and small jitter). Such traffic is referred to as latency sensitive traffic. Restricted TWT operation may allow an AP to use enhanced medium access protection and resource reservation mechanisms to provide more predictable latency, reduced worst case latency, and/or reduced jitter, with higher reliability for latency sensitive traffic.

Using TWT, a STA may negotiate awake periods with an AP to transmit and receive data packets. The STA may save power the rest of the time as the STA may remain in a doze state. TWT operation may thus lead to low power consumption for the participating STAs. TWT operation may also reduce the contention level and may support a collision-free and deterministic operation when STAs are distributed over different TWT sessions.

Using restricted TWT (r-TWT) operation, an AP may allocate r-TWT SP(s) that may be used for transmission of data frames with latency sensitive traffic by the AP and one or more STAs. Traffic identifiers (TIDs) of latency sensitive traffic may be indicated in a broadcast frame (e.g., beacon frame, probe response frame, etc.) sent by the AP. The TIDs may be indicated in a restricted TWT DL TID bitmap and/or a restricted TWT UL TID bitmap of a restricted TWT traffic info field of a TWT element. A data frame with a TID that is not identified as latency sensitive traffic may not be transmitted during an r-TWT SP.

A restricted TWT scheduling AP, referred to as an r-TWT scheduling AP, may be an extremely high throughput AP (EHT AP) (or a "Beyond EHT" AP) that supports restricted TWT operation. A restricted TWT scheduled STA, referred to as an r-TWT scheduled STA, is a non-AP EHT STA (or a non-AP "Beyond EHT" STA) that supports restricted TWT operation. When a restricted TWT agreement is set up, the EHT AP may announce a restricted TWT SP (r-TWT SP) schedule information in a broadcast TWT element. The broadcast TWT element may be contained in a management frame such as a beacon frame or a probe response frame.

The EHT AP may schedule a quiet interval that overlaps with a restricted TWT SP. The quiet interval may have a duration of 1 TU. The quiet interval may start at the same time as the corresponding r-TWT SP. A quiet interval may be scheduled by including a quiet element in a beacon frame and/or a probe response frame. Legacy STAs may not be permitted to initiate a frame transmission during the quiet interval overlapping with the r-TWT SP.

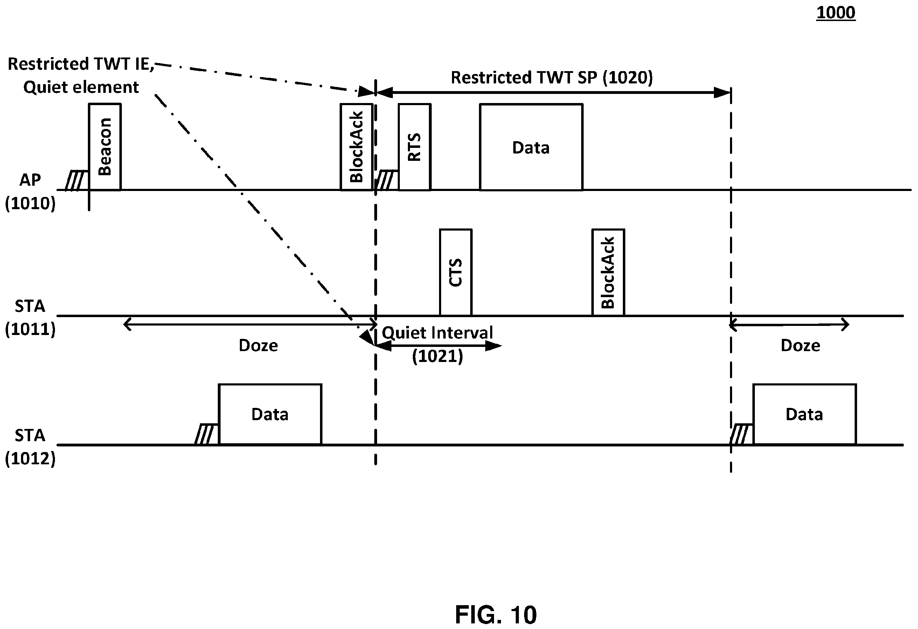

FIG. 10 illustrates an example 1000 of restricted TWT operation. As shown in FIG. 10, example 1000 includes an AP 1010, a first STA 1011, and a second STA 1012.

In an example, a restricted TWT agreement may be setup between AP 1010 and STA 1011. The r-TWT agreement may not include STA 1012. For example, STA 1012 may be a legacy STA or an EHT STA not scheduled by AP 1010 as part of the r-TWT agreement.

In an example, AP 1010 may transmit a beacon frame including a TWT element that indicates an r-TWT SP 1020 and TIDs allowed to be transmitted during the r-TWT SP 1020. The beacon frame may also include a quiet element indicating a quiet interval 1021.

Upon receiving the beacon frame, STA 1011 may enter a doze state and may remain in the doze state until the start of r-TWT SP 1020. STA 1012, which is not scheduled by AP 1010 for the r-TWT SP 1020, may transmit a data frame after receiving the beacon frame. However, STA 1012 must end its transmission before the start of r-TWT SP 1020.

During the r-TWT SP 1020, AP 1010 and STA 1011 may exchange an RTS frame and a CTS frame. Subsequently, AP 1010 may send a data frame to STA 1011. The data frame includes traffic having a TID from among the TIDs indicated as permitted to transmit during r-TWT SP 1020 (i.e., latency sensitive traffic) in the beacon frame. STA 1012 may not access the channel at least during quiet interval 1021 indicated in the beacon frame. When quiet interval 1021 or r-TWT SP 1020 ends, STA 1012 may resume its transmission. STA 1011 may enter doze state at the end of r-TWT SP 1020.

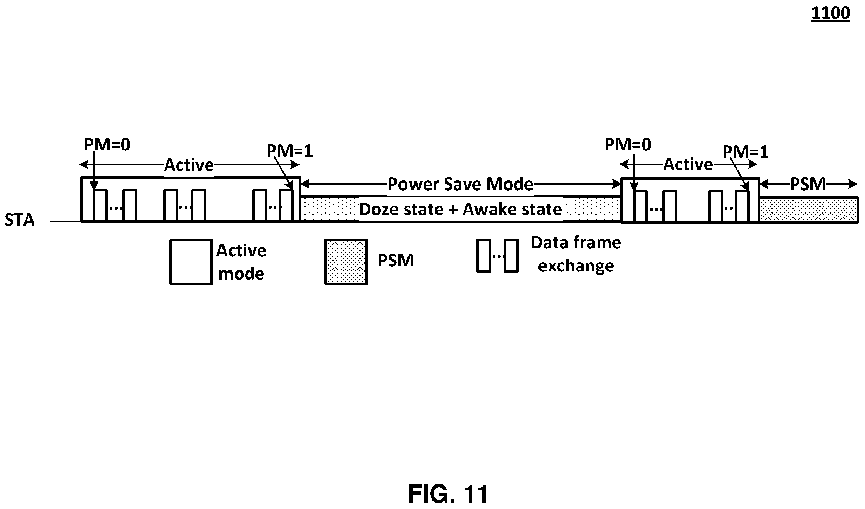

FIG. 11 illustrates an example 1100 of power save mode operation of a STA. The STA may be in one of two power states: an awake state and a doze state. In the awake state, the STA is fully powered. In the doze state, the STA consumes very low power and may not be able to transmit or receive frames. In addition, the STA may be in one of two power management modes: an active mode and a power save (PS) mode. In the active mode, the STA is continuously in the awake state and may receive and transmit frames at any time. In the PS mode, the STA may alternate between the awake state and the doze state. For example, the STA may enter the awake state to receive or transmit frames and then switch to the doze state to reduce power consumption. To change its power management mode, the STA may transmit a frame (e.g., a management frame, or a data frame) to an AP with which the STA is associated. The desired power management mode may be indicated in a power management (PM) subfield of a frame control field of the frame transmitted by the STA to the AP. Upon receiving an acknowledgement frame (e.g., an ack frame or a BlockAck frame) from the AP, the STA may switch to the indicated power management mode.

The AP may buffer individually addressed BUs addressed to STAs operating in a PS mode. The buffered BUs may be transmitted only at designated times.

In an example 1100, the STA may transmit to an AP a frame with a PM subfield set to 0 indicating its wish to operate in active mode. The AP may acknowledge the frame. The STA may then transmit and/or receive frames to/from the AP. At the end of the frame exchange, the STA may transmit to the AP a frame with a PM subfield set to 1 indicating its wish to switch to PS mode. Upon acknowledgment from the AP, the STA may change its power management mode from the active mode to the PS mode. While in the PS mode, the STA may enter the doze state and/or may switch to the awake state to check whether the AP has downlink buffered BUs addressed to the STA by receiving a traffic indication map (TIM) element in a beacon frame.

The STA may determine that a BU is buffered for the STA by receiving and interpreting the TIM element. The TIM element may include a traffic indication partial virtual bitmap maintained by the AP. The STA operating in PS mode may periodically listen for beacon frames, as determined by a listen interval parameter which may be indicated in association request and association response frames. On determining that a BU is currently buffered for it at the AP, the STA may transmit a power save poll (PS-Poll) frame to the AP. The AP may respond with the corresponding buffered BU immediately or may acknowledges the PS-Poll frame and respond with the corresponding BU at a later time.

The AP may maintain for an associated STA a power management status that indicates in which power management mode the STA is currently operating. The AP may, depending on the power management mode of the STA, temporarily buffer BUs destined to the STA. At a beacon interval, the AP may assemble the traffic indication partial virtual bitmap containing the buffer status per destination for STAs in PS mode and may transmit the traffic indication partial virtual bitmap in a TIM element of a beacon frame. When the AP receives a PS-Poll frame from a STA that is in PS mode, the AP may forward to the STA a buffered BU. The AP may respond after a SIFS either with a data or management frame, or with an ack frame, in which case the corresponding data or management frame is delayed. For a STA in PS mode, the AP may set a more data (MD) subfield of the response data or management frame to 1 or 0 to indicate the presence or the absence of further buffered BUs (not including the BU currently being transmitted) for the STA.

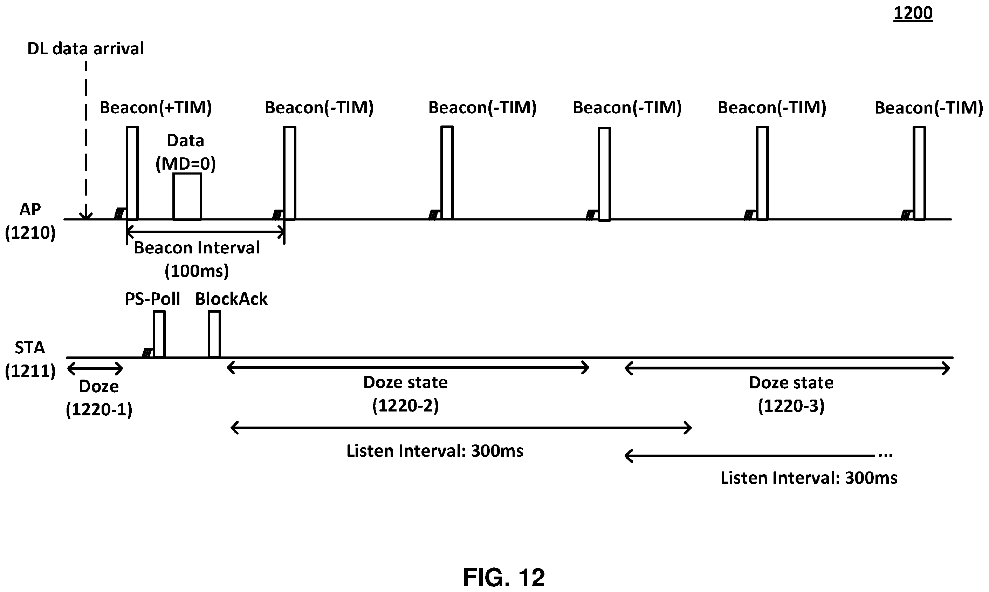

FIG. 12 illustrates an example 1200 of listening for beacon frames by a STA in power save mode. Example 1200 includes an AP 1210 and a STA 1211. AP 1210 may transmit a beacon frame including a TIM element periodically according to a beacon interval (e.g., 100ms). Example 1100 begins with STA 1211 in a doze state 1220-1. At the end of doze state 1220-1, STA 1211 may wake up to receive a beacon frame from the AP 1210. In an example, STA 1211 receives a beacon frame including a TIM element with a TIM bit set to 1 for STA 1211. STA 1211 may transmit a power save poll (PS-Poll) frame to AP 1210 and may receive a frame including DL BU(s) from AP 1210. In example 1200, AP 1210 indicates to STA 1211 that a last buffered BU for STA 1211 is being transmitted in the frame by setting an MD subfield of a MAC header of the frame to zero. STA 1211 may enter a doze state 1220-2 after transmitting an acknowledgement frame (e.g., BlockAck) to the AP 1210. After entering doze state 1220-2, STA 1211 may wake up at least once within a listen interval of STA 1211 (e.g., 300ms) to receive a beacon frame including a TIM element. On receiving a beacon frame including a TIM bit set to 0 for STA1211, STA 1211 may return to a doze state 1220-3 until it wakes up to receive another beacon frame based on the listen interval of STA 1211.

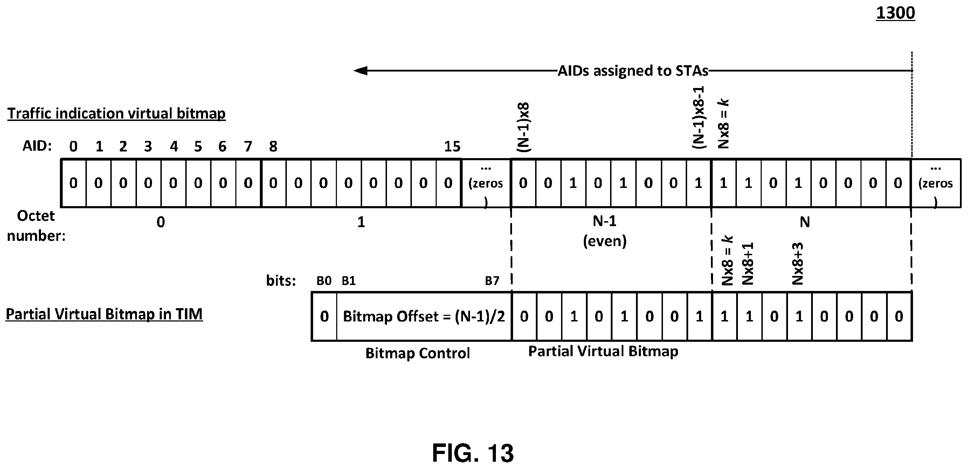

FIG. 13 illustrates an example 1300 of traffic indication map (TIM) element construction by an AP. As mentioned above, an AP may use a TIM element to identify the STAs for which traffic is pending and buffered at the AP. As shown in FIG. 13, a TIM element may include bitmap control field(s) and partial virtual bitmap field(s).

B1 to B7 of the bitmap control field(s) provide a bitmap offset indicating which AIDs are included in a partial virtual bitmap field. The TIM information is coded in the partial virtual bitmap field(s). The AP may identify STAs for which the AP is prepared to deliver buffered BUs by setting bits in the partial virtual bitmap that correspond to the respective AIDs of the STAs. AID 0 (zero) is reserved to indicate the presence of buffered group addressed BUs. In an implementation, the traffic indication partial virtual bitmap includes 2008 bits and is organized into 251 octets such that bit number *N*(0 *N* 2007) in the bitmap corresponds to bit number (*N* mod 8) in octet number *N*/8 where the low order bit of each octet is bit number 0, and the high order bit is bit number 7.

For example, a bitmap offset field set to 1 indicates third and fourth AID octets (AID 16 to AID 31) included as part of the partial virtual bitmap as bitmap offset calculation (N-1)/2. A bitmap offset field set to 1 and a partial virtual bitmap field (e.g., 2 octets) set to 00101001 11010000 as an ascending order may indicate that the AP has DL BUs addressed to STAs with AIDs equal to 18, 20, 23, 24, 25, and 27.

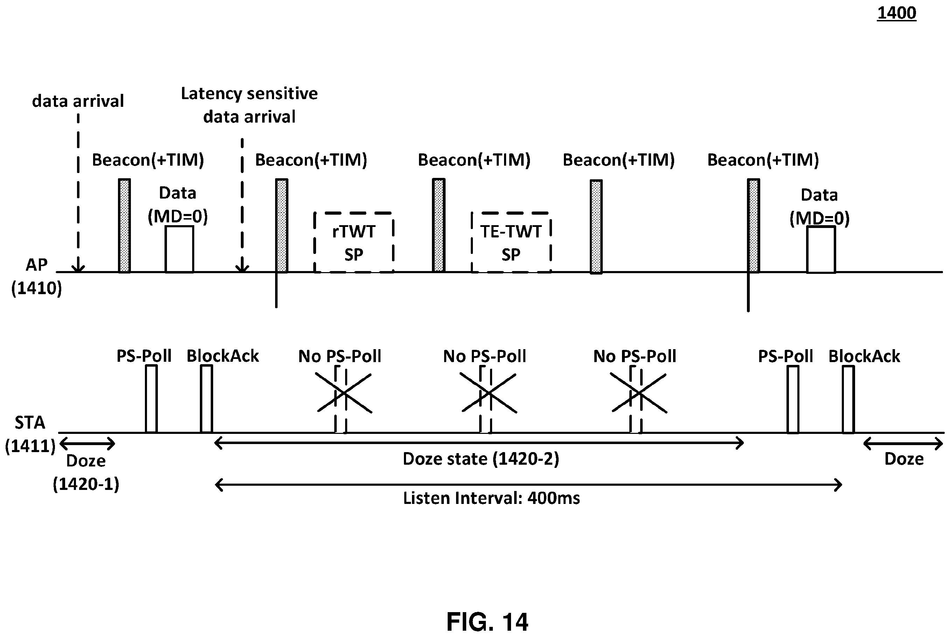

FIG. 14 is an example 1400 that illustrates a problem in an existing approach for listening for beacon frames during a power save mode. Example 1400 includes an AP 1410 and a STA 1411. AP 1410 may transmit a beacon frame including a TIM element periodically according to a beacon interval.

As shown in FIG. 14, example 1100 begins with STA 1411 in a doze state 1420-1. At the end of doze state 1420-1, STA 1411 wakes up to receive a beacon frame from AP 1410. In an example, STA 1411 receives a beacon frame including a TIM element with a TIM bit set to 1 for STA 1411. STA 1411 transmits a power save poll (PS-Poll) frame to AP 1410 and receives a frame including DL BU(s) from AP 1410. In example 1400, AP 1410 indicates to STA 1411 that a last buffered BU for STA 1411 is being transmitted in the frame by setting an MD subfield of a MAC header of the frame to zero. STA 1411 enters a doze state 1420-2 after transmitting an acknowledgement frame (e.g., BlockAck) to the AP 1410.

In an example, a data frame with latency sensitive traffic for STA 1411 arrives at AP 1410 after STA 1411 enters the doze state 1420-2. While STA 1411 is in the doze state 1420-2, AP 1410 transmits beacon frames indicating a TIM bit associated with STA 1411 set to 1. The beacon frames may also schedule an r-TWT SP or a TE TWT SP to allow STA 1411 to transmit a PS-Poll frame and/or to transmit the latency sensitive traffic to STA 1411. However, as STA 1411 is configured to wake up only once within a listen interval of STA 1411 (e.g., 400 ms), STA 1411 may not receive the beacon frames transmitted by AP 1410. STA 1411 thus does not transmit a PS-Poll frame to AP 1410 to retrieve the latency sensitive traffic until the end of doze state 1420-2. Resources (e.g., r-TWT SP or TE TWT SP resources) scheduled by AP 1410 for STA 1411 may thus be wasted. In addition, the latency sensitive traffic may only be transmitted to STA 1411 until STA 1411 exits the doze state 1420-2 and is able to receive a beacon frame indicating the TIM bit associated with STA 1411 set to 1.

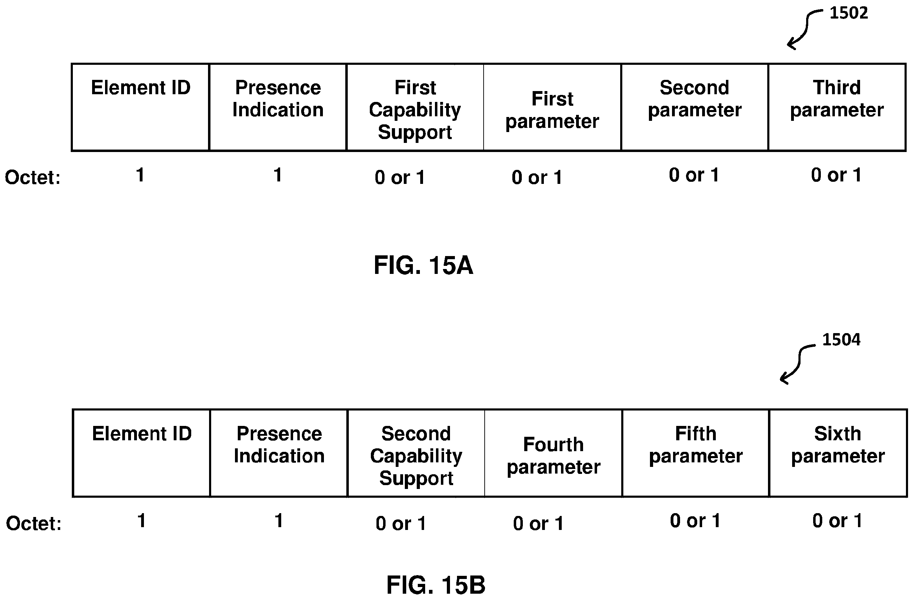

FIGs. 15-24, further described below, illustrate examples of an enhanced power save mode. The enhanced power save may comprise a first power save mode and a second power save mode.

In example embodiments, a STA may change a power management mode from an active mode to the first power save mode. During the first power save mode, the STA wakes to listen for beacon frames based on a first listening pattern. The STA may receive from an access point (AP), while in the first power save mode, a beacon frame comprising a traffic indication map (TIM) element indicating downlink (DL) bufferable units (BUs) for the STA. The STA may transmit a frame to retrieve the DL BUs. The frame to retrieve the DL BUs may be a power save poll (PS-Poll) frame or a trigger frame. After receiving the DL BUs, the STA may change the power management mode from the first power save mode to a second power save mode. During the second power save mode, the STA wakes to listen for beacon frames based on a second listening pattern.

In an example embodiment, the switching of the power management mode from the first power save mode to the second power save mode may be triggered by reception of at least one latency sensitive BU among the received DL BUs.

In an example embodiment, the first listening pattern may comprise the STA waking to listen for beacon frames at least once during a listen interval, and the second listening pattern may comprise the STA waking to listen for consecutive beacon frames a pre-determined number of times or during a pre-determined interval.

In an example embodiment, the pre-determined number of times or the pre-determined interval for the second listening pattern may be configured by parameters in an association response frame, a beacon frame, or a probe response frame. The pre-determined number of times or the pre-determined interval for the second listening pattern may be pre-configured at the STA and the AP.

In an example embodiment, a STA may change a power management mode from the first power save mode to the second power save mode. The STA may receive from an access point (AP), while in the second power save mode, at least one beacon frame. In response to each of the at least one beacon frame comprising a traffic indication map (TIM) element indicating no downlink bufferable units (BUs) for the STA, the STA may change the power management mode from the second power save mode to the first power save mode.

In an example embodiment, a STA may change a power management mode from the first power save mode to the second power save mode. The STA may receive at least one beacon frame comprising a traffic indication map (TIM) element indicating at least one downlink bufferable unit (BU) for the STA. In response to none of the at least one downlink BU being time sensitive, the STA may change the power management mode from the second power save mode to the first save mode.

FIGs. 15A and illustrate examples of a first capability element 1502 which may be sent by a STA and a second capability element 1504 which may be sent by an AP, respectively. In example embodiments, the second listening pattern of the second power save mode may be configured by first and second capability elements 1502 and 1504.

In an embodiment, a STA may transmit to an AP an association request frame comprising first capability element 1502. First capability element 1502 may comprise one or more parameters indicating preferred STA values for parameters associated with the STA listening for successive beacon frames when the second power save is triggered (or maintained). The STA may receive from the AP an association response frame comprising second capability element 1504. Second capability element 1504 may comprise one or more parameters indicating AP configured values for the parameters associated with the STA listening for successive beacon frames when the second power save is triggered (or maintained). The STA may change a power management mode from the active mode to the first power save mode. The STA in the first power save mode may receive a beacon frame comprising a TIM element. Based on the received TIM element, the STA may change the power management mode from the first power save mode to the second power save mode. For example, the TIM element in the beacon frame comprising a TIM bit associated with the STA set to 1 may trigger the STA switching to the second power save mode. While in the second power save mode, the STA may wake to listen for consecutive beacon frames a pre-determined number of times or during a pre-determined interval. The AP may provide a STA in the second power save mode with a restricted TWT SP and/or a TE TWT SP.

In an example embodiment, based on reception of successive beacon frames while in the second power save mode, the STA in power save mode may receive a latency sensitive traffic with reduced delay.

In an example embodiment, the pre-determined number of times may be determined by a parameter in second capability element 1504 or may be configured by a default value. The default value of the pre-determined number of times may be set to 1. In an example embodiment, the pre-determined interval may be determined as a specific number of beacon intervals or a specific number of listen intervals. The pre-determined interval may be determined by a parameter in second capability element 1504 or may be configured by a default value. The default value of the pre-determined interval may be set to 1 in terms of beacon intervals or as listen intervals.

In an example embodiment, second capability element 1504 may be transmitted in a beacon frame or a probe response frame.

As shown in FIG. 15A, in an embodiment, first capability element 1502 comprises at least one of: a presence indication field indicating parameters present in first capability element 1502, a first capability support field indicating whether the STA supports the enhanced power save mode comprising the first power save mode and the second power save mode, a first parameter indicating a requested value of the STA for a number of successive beacon frames to listen for when the second power save mode is triggered (or maintained), a second parameter indicating a requested value of the STA for a start offset of a beacon interval in which the STA starts waking to listen for one or more successive beacon frames when the second power save mode is triggered (or maintained), and a third parameter indicating a preference of the STA about whether switching from the first power save mode to the second power save mode is triggered by receiving at least one downlink BU of latency sensitive traffic.

As shown in FIG. 15B, in an embodiment, second capability element 1504 comprises at least one of: a presence indication field indicating parameters present in second capability element 1504, a second capability support field indicating whether the AP supports the enhanced power save mode comprising the first power save mode and the second power save mode, a fourth parameter indicating a configured value for the STA for the number of successive beacon frames to listen for when the second power save is triggered (or maintained) (denoted as N hereinbelow), a fifth parameter indicating a configured value for the STA for the start offset of the beacon interval in which the STA starts waking to listen for one or more successive beacon frames when the second power save is triggered (or maintained) (denoted as K hereinbelow), and a sixth parameter indicating whether switching from the first power save mode to the second power save mode is triggered by receiving of at least one downlink BU of latency sensitive traffic.

In an example embodiment, a data frame of latency sensitive traffic may be indicated by a specific TID frame by an AP or identified as a specific access category.

In another embodiment, the first parameter of first capability element 1502 may indicate a preferred value of the STA for a number of beacon intervals or a number of listen intervals during which the STA wakes to listen for successive beacon frames when the second power save mode is triggered (or maintained). In an embodiment, the fourth parameter of second capability element 1904 may indicate a configured value for the STA for the number of beacon intervals or the number of listen intervals.

In an embodiment, the first capability support field of first capability element 1502 and the second capability support field of second capability element 1504 may be set to 1 to indicate that the STA and the AP both support enhanced TIM monitoring. The value of zero for the first capability support field and for the second capability support field may be reserved. In an example embodiment, the first capability support field and the second capability support field may not be present respectively in first capability element 1502 and in second capability element 1504. First capability element 1502 not comprising the first capability support filed and second capability element 1504 not comprising the second capability support field may indicate that the STA and the AP support enhanced TIM monitoring.

For example, the first parameter of first capability element 1504 set to 1 may indicate that the STA prefers to listen for upcoming beacon frame(s) for one beacon interval or for one listen interval when second power save mode is triggered (or maintained). The fourth parameter set to 2 may indicate that the AP configures the STA to monitor upcoming beacon frames(s) for two beacon intervals or for two listen intervals when the second power save is triggered (or maintained). In an example, a default value of the first parameter and the fourth parameter may be set to 1. The default value may be used when the first parameter or the fourth parameter is not present in first capability element 1502 or in second capability element 1504.

For example, the second parameter of first capability element 1502 set to 0 may indicate that the STA prefers that the beacon interval in which the STA starts waking to listen for one or more successive beacon frames when the second power save mode is triggered (or maintained) to start from an upcoming target beacon transmission time (TBTT). The fifth parameter of second capability element 1504 set to 1 may indicate that the AP configures the STA with the beacon interval starting not from an upcoming TBTT but from a next TBTT. In an example, a default value of the second parameter and the fifth parameter may be set to 0. The default value may be used when the second parameter or the fifth parameter is not present in first capability element 1502 or in second capability element 1504 respectively.

For example, the third parameter of first capability element 1502 set to 0 may indicate that the STA prefers to switch from the first power save mode to the second power save mode based on reception of a TIM bit set to 1 in a beacon frame regardless of reception of DL BUs associated with latency sensitive traffic from the AP. The sixth parameter of second capability element 1504 set to 1 may indicate that switching to the second power save mode is triggered by the STA receiving both a TIM bit set to 1 in a beacon frame and DL BUs associated with latency sensitive traffic from the AP. In an example, a default value of the third parameter and the sixth parameter may be set to zero. The default value may be used when the third parameter or the sixth parameter is not present in first capability element 1502 or in second capability element 1504 respectively.

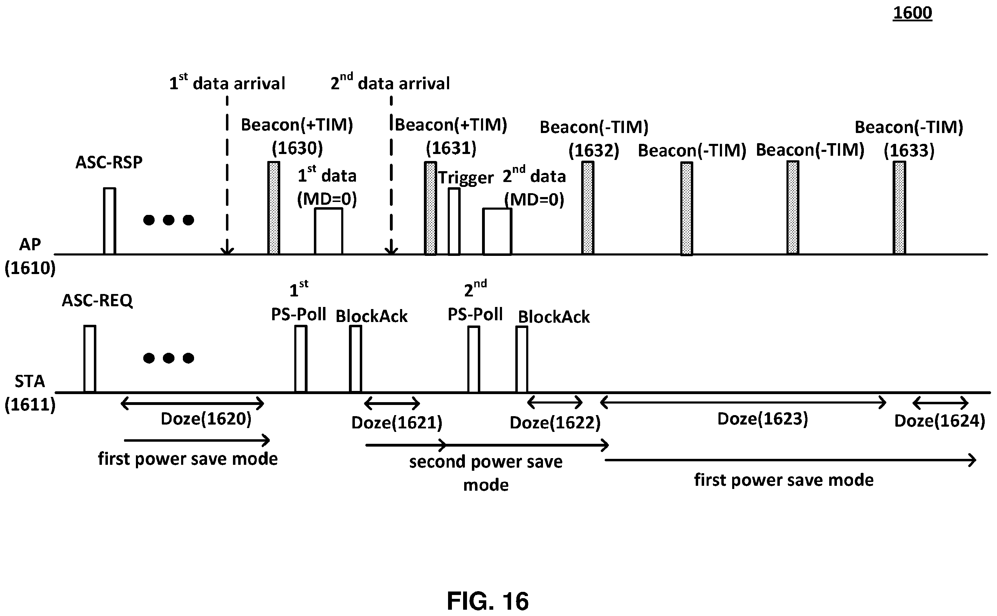

FIG. 16 illustrates an example 1600 of operation of the enhanced power save mode according to an embodiment. Example 1600 includes an AP 1610 and a STA 1611. Example 1600 corresponds to operation with the fourth parameter (N) (indicating the configured value for the STA for the number of successive beacon frames to listen for when the second power save is triggered (or maintained)) set to 1 and the fifth parameter (K) (indicating the configured value for the STA for the start offset of the beacon interval in which the STA starts waking to listen for one or more successive beacon frames when the second power save is triggered (or maintained)) set to 0.

As shown in FIG. 16, example 1600 begins with STA 1611 transmitting an association request frame to AP 1610. The association request frame may comprise a listen interval of STA 1611 and a first capability element, such as first capability element 1502. The first capability element may comprise a first capability support field indicating that STA 1611 supports the enhanced power save mode (comprising a first power save mode and a second power save mode). The first capability element may also comprise a first parameter indicating a requested value of STA 1611 for a number of successive beacon frames to listen for when the second power save mode is triggered (or maintained). In example 1600, the first parameter may be set to 1.

AP 1610 receiving the association request frame from STA 1611 may transmit an association response frame. The association response frame may comprise a second capability element, such as second capability element 1504. The second capability element may comprise a second capability support field indicating that AP 1610 supports the enhanced power save mode. The second capability element may also comprise a fourth parameter (N) indicating the configured value for the STA for the number of successive beacon frames to listen for when the second power save is triggered (or maintained). In example 1600, N may be set to 1.

In example 1600, the second parameter and/or the third parameter of the first capability element may be set to default values or may not be present in the first capability element. The second parameter set to a default value may indicate that STA 1611 prefers the beacon interval in which the STA starts waking to listen for one or more successive beacon frames when the second power save is triggered (or maintained) to start from an upcoming target beacon transmission time (TBTT). The third parameter set to a default value may indicate that STA 1611 prefers to trigger switching to the second power save mode based on reception of a TIM bit set to 1 in a beacon frame regardless of reception of DL BUs associated with latency sensitive traffic from AP 1610.

In example 1600, the fifth parameter (K) and/or the sixth parameter of the second capability element may be set to default values or may not be present in the second capability element. The fifth parameter set to a default value may indicate that STA 1611 is configured such that the beacon interval in which the STA wakes to listen for one or more successive beacon frames when the second power save is triggered (or maintained) to start from an upcoming target beacon transmission time (TBTT). The sixth parameter set to a default value may indicate that STA 1611 is configured to trigger switching to the second power save mode based on reception of a TIM bit set to 1 in a beacon frame regardless of reception of DL BUs associated with latency sensitive traffic from AP 1610.

After receiving the association response frame from AP 1610, STA 1611 may change its power management mode from an active mode to the first power save mode of the enhanced power save mode. Based on switching to the first power save mode, STA 1611 may enter a doze state 1620 and may wake to listen to beacon frames based on a first listening pattern. The first listening pattern may include STA 1611 waking to listen for beacon frames at least once in a listen interval of STA 1611.

Subsequently, a first data traffic for STA 1611 may arrive at AP 1610. AP 1610 may transmit a beacon frame 1630 including a TIM element with a TIM bit associated with STA 1611 set to 1. The TIM bit associated with STA 1611 set to 1 indicates presence of DL BUs for STA 1611. STA 1611 may wake up and receive beacon frame 1630. On receiving beacon frame 1630, STA 1611 may transmit a first PS-Poll frame to retrieve the DL BUs from AP 1610. AP 1610 delivers the DL BUs to STA 1611 in a first data frame in response to the first PS-Poll frame. AP 1610 may set a more data (MD) field of the first data frame to 0 indicating no further buffered DL BUs for STA 1611 at AP 1610. STA 1611 receiving the first data frame with the MD field set to 0 may transmit an acknowledgement frame (e.g., BlockAck) and may enter a doze state 1621.

In example 1600, STA 1611 may change its power management mode from the first power save mode to the second power save mode after receiving the first data frame from AP 1610. In the second power save mode, STA 1611 wakes to listen for beacon frames based on a second listening pattern. The second listening pattern may be configured by the fourth parameter (N) and the fifth parameter (K) of the second capability element. In example 1600, it is assumed that N is set 1 and that K is set to 0. As such, STA 1611 wakes to listen for one beacon frame starting from an upcoming TBTT.

Subsequently, a second data traffic for STA 1611 may arrive at AP 1610. AP 1610 may transmit a beacon frame 1631 including a TIM element with a TIM bit associated with STA 1611 set to 1 to indicate presence of DL BUs for STA 1611. In an embodiment, AP 1610 may determine that STA 1611 is in the second power save mode. Based on this determination, AP 1610 may include in beacon frame 1631 a broadcast target wake time (TWT) element indicating at least one of a restricted TWT (r-TWT) service period (SP) or a trigger-enabled (TE) TWT SP for STA 1611. In an embodiment, the broadcast TWT element may be included in beacon frame 1631 when the DL BUs for STA 1611 include latency sensitive traffic.

STA 1611 in the second power save mode may wake up to receive beacon frame 1631. Based on beacon frame 1631, STA 1611 may learn of the scheduling of a r-TWT SP or a TE TWT SP for STA 1611. Subsequently, AP 1610 may transmit a trigger frame to allocate an uplink resource to STA 1611 during the rTWT SP and/or the TE TWT SP. STA 1611 may use the allocated uplink resource to transmit a second PS-Poll frame to retrieve the DL BUs from AP 1610. AP 1610 delivers the DL BUs to STA 1611 in a second data frame in response to the second PS-Poll frame. AP 1610 may set an MD field of the second data frame to 0 indicating no further buffered DL BUs for STA 1611 at AP 1610. STA 1611 receiving the second data frame with the MD field set to 0 may transmit an acknowledgement frame (e.g., BlockAck) and may enter a doze state 1622.

In an embodiment, after receiving the second data frame, STA 1611 remains in the second power save mode waking to listen for beacon frames based on the second listening pattern configured by N=1 and K=0. In example 1600, STA 1611 wakes to receive a beacon frame 1632 from AP 1610. Beacon frame 1632 includes a TIM element with a TIM bit associated with STA 1611 set to 0 indicating absence of DL BUs for STA 1611 at AP 1610. In an embodiment, STA 1611 receiving beacon frame 1632 indicating no buffered DL BUs for STA 1611 may change its power management mode from the second power save mode to the first power save mode.

STA 1611 may then enter a doze state 1623 and may wake to listen for beacon frames based on the first listening pattern. The first listening pattern may include STA 1611 waking to listen for beacon frames at least once in a listen interval of STA 1611. The listen interval of STA 1611 may be equal to 300 ms for example. In example 1600, STA 1611 wakes to receive a beacon frame 1633 from AP 1610 while in the first power save mode. Beacon frame 1633 includes a TIM element with a TIM bit associated with STA 1611 set to 0 indicating absence of DL BUs for STA 1611 at AP 1610. Based on receiving beacon frame 1633, STA 1611 may remain in the first power save mode waking to listen for beacon frames based on the first listening pattern.

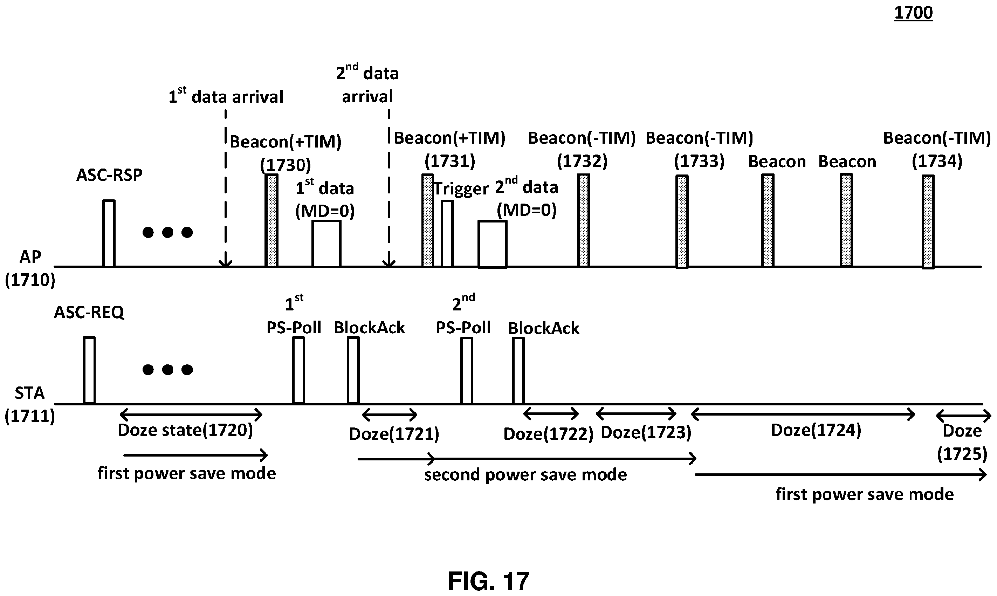

FIG. 17 illustrates an example 1700 of operation of the enhanced power save mode according to an embodiment. Example 1700 includes an AP 1710 and a STA 1711. Example 1700 corresponds to operation with the fourth parameter (N) (indicating the configured value for the STA for the number of successive beacon frames to listen for when the second power save is triggered (or maintained)) set to 2 and the fifth parameter (K) (indicating the configured value for the STA for the start offset of the beacon interval in which the STA starts waking to listen for one or more successive beacon frames when the second power save is triggered (or maintained)) set to 0.

As shown in FIG. 17, example 1700 begins with STA 1711 transmitting an association request frame to AP 1710. The association request frame may comprise a listen interval of STA 1711 and a first capability element, such as first capability element 1502. The first capability element may comprise a first capability support field indicating that STA 1711 supports the enhanced power save mode (comprising a first power save mode and a second power save mode). The first capability element may also comprise a first parameter indicating a requested value of STA 1711 for a number of successive beacon frames to listen for when the second power save mode is triggered (or maintained). In example 1700, the first parameter may be set to 2.

AP 1710 receiving the association request frame from STA 1711 may transmit an association response frame. The association response frame may comprise a second capability element, such as second capability element 1504. The second capability element may comprise a second capability support field indicating that AP 1710 supports the enhanced power save mode. The second capability element may also comprise a fourth parameter (N) indicating the configured value for the STA for the number of successive beacon frames to listen for when the second power save is triggered (or maintained). In example 1700, N may be set to 2.

In example 1700, the second parameter and/or the third parameter of the first capability element may be set to default values or may not be present in the first capability element. The second parameter set to a default value may indicate that STA 1711 prefers the beacon interval in which the STA starts waking to listen for one or more successive beacon frames when the second power save mode is triggered (or maintained) to start from an upcoming target beacon transmission time (TBTT). The third parameter set to a default value may indicate that STA 1711 prefers to trigger switching to the second power save mode based on reception of a TIM bit set to 1 in a beacon frame regardless of reception of DL BUs associated with latency sensitive traffic from AP 1710.

In example 1700, the fifth parameter (K) and/or the sixth parameter of the second capability element may be set to default values or may not be present in the second capability element. The fifth parameter set to a default value may indicate that STA 1711 is configured such that the beacon interval in which the STA wakes to listen for one or more successive beacon frames when the second power save is triggered (or maintained) to start from an upcoming target beacon transmission time (TBTT). The sixth parameter set to a default value may indicate that STA 1711 is configured to trigger switching to the second power save mode based on reception of a TIM bit set to 1 in a beacon frame regardless of reception of DL BUs associated with latency sensitive traffic from AP 1710.

After receiving the association response frame from AP 1710, STA 1711 may change its power management mode from an active mode to the first power save mode of the enhanced power save mode. Based on switching to the first power save mode, STA 1711 may enter a doze state 1720 and may wake to listen to beacon frames based on a first listening pattern. The first listening pattern may include STA 1711 waking to listen for beacon frames at least once in a listen interval of STA 1711.

Subsequently, a first data traffic for STA 1711 may arrive at AP 1710. AP 1710 may transmit a beacon frame 1730 including a TIM element with a TIM bit associated with STA 1711 set to 1. The TIM bit associated with STA 1711 set to 1 indicates presence of DL BUs for STA 1711. STA 1711 may wake up and receive beacon frame 1730. On receiving beacon frame 1730, STA 1711 may transmit a first PS-Poll frame to retrieve the DL BUs from AP 1710. AP 1710 delivers the DL BUs to STA 1711 in a first data frame in response to the first PS-Poll frame. AP 1710 may set a more data (MD) field of the first data frame to 0 indicating no further buffered DL BUs for STA 1711 at AP 1710. STA 1711 receiving the first data frame with the MD field set to 0 may transmit an acknowledgement frame (e.g., BlockAck) and may enter a doze state 1721.

In example 1700, STA 1711 may change its power management mode from the first power save mode to the second power save mode after receiving the first data frame from AP 1710. In the second power save mode, STA 1711 wakes to listen for beacon frames based on a second listening pattern. The second listening pattern may be configured by the fourth parameter (N) and the fifth parameter (K) of the second capability element. In example 1700, it is assumed that N is set 2 and that K is set to 0. As such, STA 1711 wakes to listen for two successive beacon frames starting from an upcoming TBTT.

Subsequently, a second data traffic for STA 1711 may arrive at AP 1710. AP 1710 may transmit a beacon frame 1731 including a TIM element with a TIM bit associated with STA 1711 set to 1 to indicate presence of DL BUs for STA 1711. In an embodiment, AP 1710 may determine that STA 1711 is in the second power save mode. Based on this determination, AP 1710 may include in beacon frame 1731 a broadcast TWT element indicating at least one of a r-TWT SP or a TE TWT SP for STA 1711. In an embodiment, the broadcast TWT element may be included in beacon frame 1731 when the DL BUs for STA 1711 include latency sensitive traffic.

STA 1711 in the second power save mode may wake up to receive beacon frame 1731. Based on beacon frame 1731, STA 1711 may learn of the scheduling of a r-TWT SP or a TE TWT SP for STA 1711. Subsequently, AP 1710 may transmit a trigger frame to allocate an uplink resource to STA 1711 during the rTWT SP and/or the TE TWT SP. STA 1711 may use the allocated uplink resource to transmit a second PS-Poll frame to retrieve the DL BUs from AP 1710. AP 1710 delivers the DL BUs to STA 1711 in a second data frame in response to the second PS-Poll frame. AP 1710 may set an MD field of the second data frame to 0 indicating no further buffered DL BUs for STA 1711 at AP 1710. STA 1711 receiving the second data frame with the MD field set to 0 may transmit an acknowledgement frame (e.g., BlockAck) and may enter a doze state 1722.

In an embodiment, after receiving the second data frame, STA 1711 remains in the second power save mode waking to listen for beacon frames based on the second listening pattern configured by N=2 and K=0. In example 1700, STA 1711 wakes to receive a (first) beacon frame 1732 from AP 1710. Beacon frame 1732 includes a TIM element with a TIM bit associated with STA 1711 set to 0 indicating absence of DL BUs for STA 1711 at AP 1710. Based on receiving beacon frame 1732, STA 1711 may enter a doze state 1723 while remaining in the second power save mode. STA 1711 subsequently wakes to receive a (second) beacon frame 1733 from AP 1710. Beacon frame 1733 includes a TIM element with a TIM bit associated with STA 1711 set to 0 indicating absence of DL BUs for STA 1711 at AP 1710.

In an embodiment, STA 1711 receiving successive beacon frames 1732 and 1733 indicating no buffered DL BUs for STA 1711 may change its power management mode from the second power save mode to the first power save mode. STA 1711 may then enter a doze state 1724 and may wake to listen for beacon frames based on the first listening pattern. The first listening pattern may include STA 1711 waking to listen for beacon frames at least once in a listen interval of STA 1711. The listen interval of STA 1711 may be equal to 300 ms for example. In example 1700, STA 1711 wakes to receive a beacon frame 1734 from AP 1710 while in the first power save mode. Beacon frame 1734 includes a TIM element with a TIM bit associated with STA 1711 set to 0 indicating absence of DL BUs for STA 1711 at AP 1710. Based on receiving beacon frame 1734, STA 1711 may return to a doze state 1725 while remaining in the first power save mode waking to listen for beacon frames based on the first listening pattern.

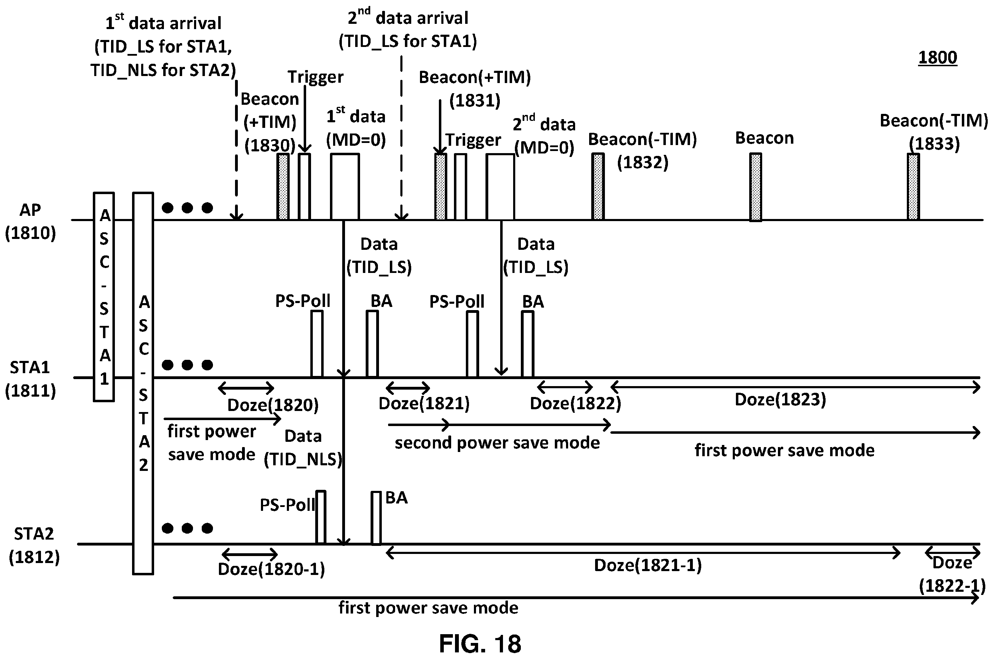

FIG. 18 illustrates an example 1800 of operation of the enhanced power save mode according to an embodiment. Example 1800 includes an AP 1810, a STA 1811, and a STA 1812. Example 1800 corresponds to operation with the fourth parameter (N) (indicating the configured value for the STA for the number of successive beacon frames to listen for when the second power save is triggered (or maintained)) set to 1 and the fifth parameter (K) (indicating the configured value for the STA for the start offset of the beacon interval in which the STA starts waking to listen for one or more successive beacon frames when the second power save is triggered (or maintained)) set to 0.

As shown in FIG. 18, example 1800 begins with STA 1811 transmitting an association request frame to AP 1810. The association request frame may comprise a listen interval of STA 1811 and a first capability element, such as first capability element 1502. The first capability element may comprise a first capability support field indicating that STA 1811 supports the enhanced power save mode (comprising a first power save mode and a second power save mode). The first capability element may also comprise a first parameter indicating a requested value of STA 1811 for a number of successive beacon frames to listen for when the second power save mode is triggered (or maintained). In example 1800, the first parameter may be set to 1.

AP 1810 receiving the association request frame from STA 1811 may transmit an association response frame. The association response frame may comprise a second capability element, such as second capability element 1504. The second capability element may comprise a second capability support field indicating that AP 1810 supports the enhanced power save mode. The second capability element may also comprise a fourth parameter (N) indicating the configured value for the STA for the number of successive beacon frames to listen for when the second power save is triggered (or maintained). In example 1800, N may be set to 1.

In example 1800, a third parameter of the first capability element included in the association request frame transmitted by STA 1811 and/or the sixth parameter of the second capability element included in the association response frame transmitted by AP 1810 may be set to 1. The third parameter set to 1 indicates a preference of STA 1811 for switching to the second power save upon receiving a TIM bit set to 1 in a beacon frame and receiving DL BUs of latency sensitive traffic from AP 1810. The sixth parameter set to 1 indicates that STA 1811 is being configured by AP 1810 to change to the second power save based on receiving a TIM bit set to 1 in a beacon frame and receiving DL BUs of latency sensitive traffic from AP 1810. In an embodiment, the third parameter may not be present in the first capability element and/or the sixth parameter may not be present in the second capability element. Their absence may be configured as indicating switching to the second power save mode triggered by STA 1811 receiving DL BUs of latency sensitive traffic from AP 1810.

In example 1800, the second parameter of the first capability element may be set to a default value or may not be present in the first capability element. The second parameter set to a default value may indicate that STA 1811 prefers the beacon interval in which the STA starts waking to listen for one or more successive beacon frames when the second power save mode is triggered (or maintained) to start from an upcoming target beacon transmission time (TBTT).

In example 1800, the fifth parameter (K) of the second capability element may be set to a default value or may not be present in the second capability element. The fifth parameter set to a default value may indicate that STA 1811 is configured such that the beacon interval in which the STA starts waking to listen for one or more successive beacon frames when the second power save is triggered (or maintained) starts from an upcoming target beacon transmission time (TBTT).

In example 1800, it is assumed that STA 1812 may be configured with the same parameter configuration as STA 18111 during the association procedure with AP 1810 (e.g., a first capability support field equal to 1, a second capability support field set to 1, a first parameter equal to 1, a second parameter equal to 0, a third parameter equal to 1, a fourth parameter equal to 1, a fifth parameter (K) equal to 0, and a sixth parameter equal to 1).

After receiving the association response frames from AP 1810, STAs 1811 and 1812 may change their power management modes from an active mode to the first power save mode of the enhanced power save mode. Based on switching to the first power save mode, STA 1811 may enter a doze state 1820 and may wake to listen to beacon frames based on a first listening pattern. The first listening pattern may include STA 1811 waking to listen for beacon frames at least once in a listen interval of STA 1811. Similarly, STA 1812 may enter a doze state 1820-1 and may wake to listen to beacon frames based on the first listening pattern.

Subsequently, a first data traffic for STAs 1811 and 1812 may arrive at AP 1810. The first data traffic may include latency sensitive for STA 1811 and non-latency sensitive traffic for STA 1812. AP 1810 may transmit a beacon frame 1830 including a TIM element with TIM bits associated with STAs 1811 and 1812 set to 1. The TIM bits associated with STAs 1811 and 1812 set to 1 indicate presence of DL BUs for STAs 1811 and 1812 respectively. STAs 1811 and 1812 may wake up and receive beacon frame 1830. On receiving beacon frame 1830, STAs 1811 and 1812 may transmit respective first PS-Poll frames to retrieve their respective DL BUs from AP 1810. In an embodiment, AP 1810 may transmit a trigger frame to STAs 1811 and 1812 allocating uplink resources for transmission of the first PS-Poll frames. AP 1810 delivers the DL BUs to STAs 1811 and 1812 in a first data frame in response to the first PS-Poll frames. AP 1810 may set a more data (MD) field of the first data frame to 0 indicating no further buffered DL BUs for STAs 1811 and 1812 at AP 1810. STA 1811 receiving the first data frame with the MD field set to 0 may transmit an acknowledgement frame (e.g., BlockAck) and may enter a doze state 1821. Similarly, STA 1812 receiving the first data frame with the MD field set to 0 may transmit an acknowledgement frame (e.g., BlockAck) and may enter a doze state 1821-1.

In an embodiment, as shown in example 1800, as the DL BUs received by STA 1812 in the first data frame include non-latency sensitive traffic, STA 1812 may remain in the first power save mode after receiving the DL BUs. This may be despite the fact that beacon frame 1830 included a TIM bit set to 1 for STA 1812. Subsequently, STA 1812 may wake up to receive beacon frames at least one in a listen interval of STA 1812. In an example, the listen interval of STA 1812 may be 400ms and the beacon interval may be 100ms. STA 1812 may wake up from doze state 1821-1 to receive a beacon frame 1833 from AP 1810 and may then return to a doze state 1822-1. Beacon frame 1833 may include a TIM bit set to 0 for STA 1812. As such, STA 1812 may remain in the first power save mode.

In contrast, STA 1811 may from the first power save mode to the second power save mode based on receiving a TIM bit set to 1 in beacon frame 1830 and receiving DL BUs including latency sensitive traffic in the first data frame from AP 1810. In the second power save mode, STA 1811 wakes to listen for beacon frames based on a second listening pattern. The second listening pattern may be configured by the fourth parameter (N) and the fifth parameter (K) of the second capability element. In example 1800, it is assumed that N is set 1 and that K is set to 0. As such, STA 1811 wakes to listen for one beacon frame starting from an upcoming TBTT.

Subsequently, a second data traffic for STA 1811 may arrive at AP 1810. The second data traffic may include latency sensitive for STA 1811. AP 1810 may transmit a beacon frame 1831 including a TIM element with a TIM bit associated with STA 1811 set to 1 to indicate presence of DL BUs for STA 1811. In an embodiment, AP 1810 may determine that STA 1811 is in the second power save mode. Based on this determination, AP 1810 may include in beacon frame 1831 a broadcast TWT element indicating at least one of a r-TWT SP or a TE TWT SP for STA 1811. In an embodiment, the broadcast TWT element may be included in beacon frame 1831 when the DL BUs for STA 1811 include latency sensitive traffic.

STA 1811 in the second power save mode may wake up to receive beacon frame 1831. Based on beacon frame 1831, STA 1811 may learn of the scheduling of a r-TWT SP or a TE TWT SP for STA 1811. Subsequently, AP 1810 may transmit a trigger frame to allocate an uplink resource to STA 1811 during the rTWT SP and/or the TE TWT SP. STA 1811 may use the allocated uplink resource to transmit a second PS-Poll frame to retrieve the DL BUs from AP 1810. AP 1810 delivers the DL BUs to STA 1811 in a second data frame in response to the second PS-Poll frame. AP 1810 may set an MD field of the second data frame to 0 indicating no further buffered DL BUs for STA 1811 at AP 1810. STA 1811 receiving the second data frame with the MD field set to 0 may transmit an acknowledgement frame (e.g., BlockAck) and may enter a doze state 1822.

In an embodiment, based on receiving a TIM bit set to 1 in beacon frame 1831 and receiving DL BUs including latency sensitive traffic in the second data frame from AP 1810, STA 1811 remains in the second power save after receiving the second data frame, waking to listen for beacon frames based on the second listening pattern configured by N=1 and K=0. In example 1800, STA 1811 wakes to receive a beacon frame 1832 from AP 1810. Beacon frame 1832 includes a TIM element with a TIM bit associated with STA 1811 set to 0 indicating absence of DL BUs for STA 1811 at AP 1810. Based on receiving beacon frame 1832, STA 1811 may switch from the second power save mode to the first power mode. STA 1811 may then enter a doze state 1823 and may wake to listen for beacon frames based on the first listening pattern. The first listening pattern may include STA 1811 waking to listen for beacon frames at least once in a listen interval of STA 1811. The listen interval of STA 1811 may be equal to 400ms for example. In an example, based on the first listening pattern, STA 1811 may not wake to listen to a beacon frame 1833 transmitted by AP 1810.

In another example (not shown in FIG. 18), beacon frame 1832 may include a TIM bit associated with STA 1811 set to 1 indicating presence of DL BUs for STA 1811 at AP 1810. STA 1811 may transmit a PS-Poll frame to AP 1810 to retrieve the DL BUs. In response, AP 1810 may transmit a third data frame containing the DL BUs to STA 1811. In an example, the DL BUs do not include latency sensitive traffic, based on which STA 1811 may switch from the second power save mode to the first power save. STA 1811 may then enter doze state 1823 and may wake to listen for beacon frames based on the first listening pattern as described above.

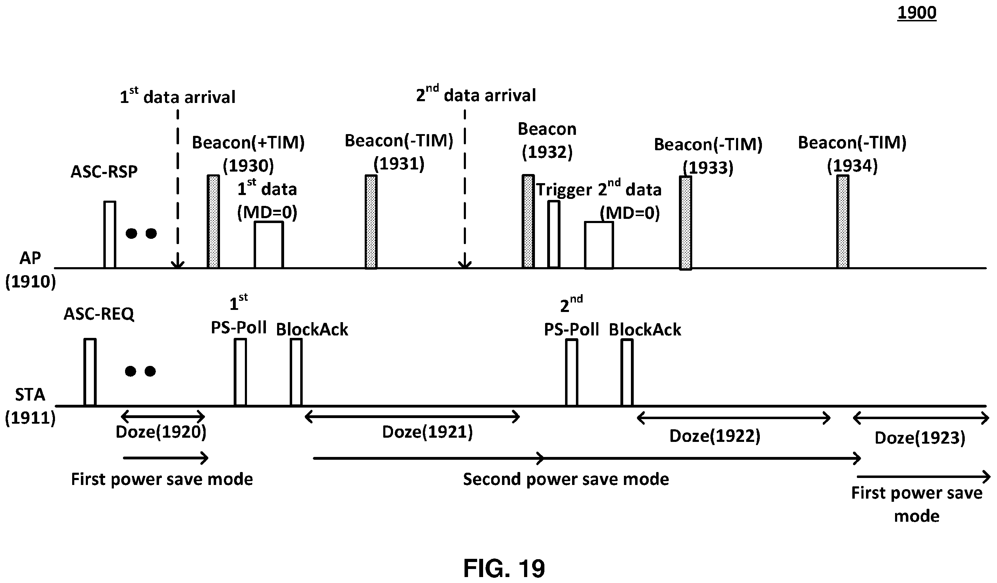

FIG. 19 illustrates an example 1900 of operation of the enhanced power save mode according to an embodiment. Example 1900 includes an AP 1910 and a STA 1911. Example 1900 corresponds to operation with the fourth parameter (N) (indicating the configured value for the STA for the number of successive beacon frames to listen for when the second power save is triggered (or maintained)) set to 1 and the fifth parameter (K) (indicating the configured value for the STA for the start offset of the beacon interval in which the STA starts waking to listen for one or more successive beacon frames when the second power save is triggered (or maintained)) set to 1.

As shown in FIG. 19, example 1900 begins with STA 1911 transmitting an association request frame to AP 1910. The association request frame may comprise a listen interval of STA 1911 and a first capability element, such as first capability element 1502. The first capability element may comprise a first capability support field indicating that STA 1911 supports the enhanced power save mode (comprising a first power save mode and a second power save mode). The first capability element may also comprise a first parameter indicating a requested value of STA 1911 for a number of successive beacon frames to listen for when the second power save mode is triggered (or maintained). In example 1900, the first parameter may be set to 1. The first capability element may further comprise a second parameter indicating a requested value of STA 1911 for a start offset of a beacon interval in which STA 1911 starts waking to listen for one or more successive beacon frames when the second power save is triggered (or maintained). In example 1900, the second parameter may be set to 1, meaning that STA 1911 requests to start listening based on the second listening pattern not from an upcoming TBTT but from a next TBTT once the second power save mode is triggered (or maintained).

AP 1910 receiving the association request frame from STA 1911 may transmit an association response frame. The association response frame may comprise a second capability element, such as second capability element 1504. The second capability element may comprise a second capability support field indicating that AP 1910 supports the enhanced power save mode. The second capability element may also comprise a fourth parameter (N) indicating the configured value for the STA for the number of successive beacon frames to listen for when the second power save is triggered (or maintained). In example 1900, N may be set to 1. The second capability element may further comprise a fifth parameter (K) indicating a configured value for STA 1911 for the start offset of the beacon interval in which STA 1911 starts waking to listen for one or more successive beacon frames when the second power save is triggered (or maintained). In example 1900, the second parameter may be set to 1, meaning that AP 1910 configures STA 1911 to start listening based on the second listening pattern not from an upcoming TBTT but from a next TBTT once the second power save mode is triggered (or maintained).

In example 1900, the third parameter of the first capability element may be set to a default value (e.g., 0) or may not be present in the first capability element. The third parameter set to a default value may indicate that STA 1911 prefers to trigger switching to the second power save mode based on reception of a TIM bit set to 1 in a beacon frame regardless of reception of DL BUs associated with latency sensitive traffic from AP 1910.

In example 1900, the sixth parameter of the second capability element may be set to a default value (e.g., 0) or may not be present in the second capability element. The sixth parameter set to a default value may indicate that STA 1911 is configured to trigger switching to the second power save mode based on reception of a TIM bit set to 1 in a beacon frame regardless of reception of DL BUs associated with latency sensitive traffic from AP 1910.

After receiving the association response frame from AP 1910, STA 1911 may change its power management mode from an active mode to the first power save mode of the enhanced power save mode. Based on switching to the first power save mode, STA 1911 may enter a doze state 1920 and may wake to listen to beacon frames based on a first listening pattern. The first listening pattern may include STA 1911 waking to listen for beacon frames at least once in a listen interval of STA 1911.

Subsequently, a first data traffic for STA 1911 may arrive at AP 1910. AP 1910 may transmit a beacon frame 1930 including a TIM element with a TIM bit associated with STA 1911 set to 1. The TIM bit associated with STA 1911 set to 1 indicates presence of DL BUs for STA 1911. STA 1911 may wake up and receive beacon frame 1930. On receiving beacon frame 1930, STA 1911 may transmit a first PS-Poll frame to retrieve the DL BUs from AP 1910. AP 1910 delivers the DL BUs to STA 1911 in a first data frame in response to the first PS-Poll frame. AP 1910 may set a more data (MD) field of the first data frame to 0 indicating no further buffered DL BUs for STA 1911 at AP 1910. STA 1911 receiving the first data frame with the MD field set to 0 may transmit an acknowledgement frame (e.g., BlockAck) and may enter a doze state 1921.

In example 1900, STA 1911 may switch its power management mode from the first power save mode to the second power save mode after receiving the first data frame from AP 1910. In the second power save mode, STA 1911 wakes to listen for beacon frames based on a second listening pattern. The second listening pattern may be configured by the fourth parameter (N) and the fifth parameter (K) of the second capability element. In example 1900, it is assumed that N is set 1 and that K is set to 1. As such, STA 1911 wakes to listen for one beacon starting not from an upcoming TBTT but a next TBTT once the second power save mode is triggered. STA 1911 may thus not wake up at the upcoming TBTT to receive a beacon frame 1931. Instead, STA 1911 may wake up at a next TBTT to receive a beacon frame 1932.

In example 1900, a second data traffic for STA 1911 may arrive at AP 1910 between the transmission times of beacon frames 1931 and 1932. AP 1910 may transmit beacon frame 1932 including a TIM element with a TIM bit associated with STA 1911 set to 1 to indicate presence of DL BUs for STA 1911. In an embodiment, AP 1910 may determine that STA 1911 is in the second power save mode. Based on this determination, AP 1910 may include in beacon frame 1931 a broadcast TWT element indicating at least one of a r-TWT SP or a TE TWT SP for STA 1911. In an embodiment, the broadcast TWT element may be included in beacon frame 1932 when the DL BUs for STA 1911 include latency sensitive traffic.

STA 1911 in the second power save mode may wake up to receive beacon frame 1932. Based on beacon frame 1932, STA 1911 may learn of the scheduling of a r-TWT SP or a TE TWT SP for STA 1911. Subsequently, AP 1910 may transmit a trigger frame to allocate an uplink resource to STA 1911 during the rTWT SP and/or the TE TWT SP. STA 1911 may use the allocated uplink resource to transmit a second PS-Poll frame to retrieve the DL BUs from AP 1910. AP 1910 delivers the DL BUs to STA 1911 in a second data frame in response to the second PS-Poll frame. AP 1910 may set an MD field of the second data frame to 0 indicating no further buffered DL BUs for STA 1911 at AP 1910. STA 1911 receiving the second data frame with the MD field set to 0 may transmit an acknowledgement frame (e.g., BlockAck) and may enter a doze state 1922.

In an embodiment, after receiving the second data frame, STA 1911 remains in the second power save mode waking to listen for beacon frames based on the second listening pattern configured by N=1 and K=1. As such, STA 1911 may not wake up at the upcoming TBTT to receive a beacon frame 1933 but, instead, may wake up at a next TBTT to receive a beacon frame 1934. Beacon frame 1934 includes a TIM element with a TIM bit associated with STA 1911 set to 0 indicating absence of DL BUs for STA 1911 at AP 1910.

Based on receiving beacon frame 1934, STA 1911 may switch from the second power save mode to the first power save. STA 1911 may then return to a doze state 1923 and may wake to listen for beacon frames based on the first listening pattern. The first listening pattern may include STA 1911 waking to listen for beacon frames at least once in a listen interval of STA 1911. The listen interval of STA 1911 may be equal to 300 ms for example.

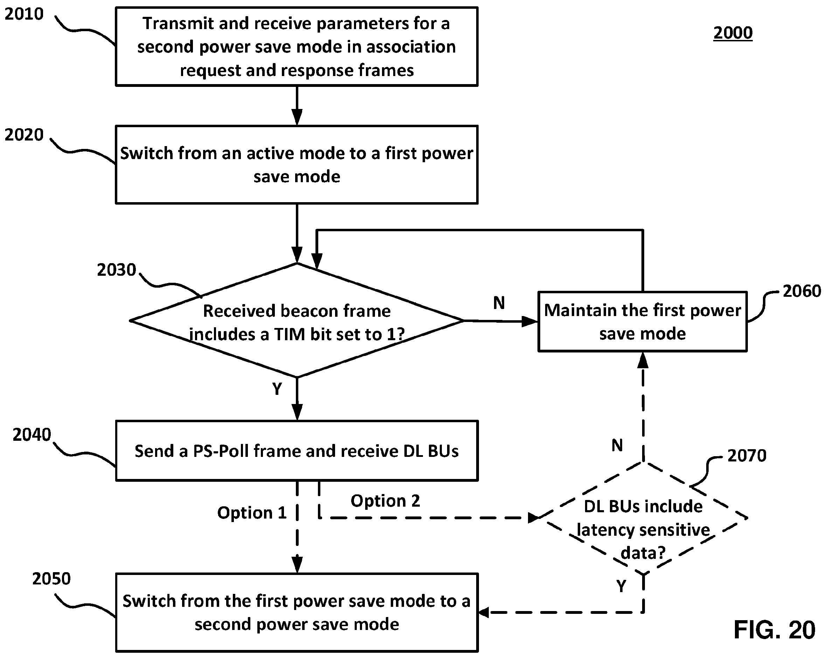

FIG. 20 illustrates an example process 2000 according to an embodiment. Example process 2000 is provided for the purpose of illustration only and is not limiting of embodiments. Example process 2000 may be performed by a STA capable of operating according to the enhanced power save mode as described herein.

Process 2100 may begin in step 2010, which includes the STA transmitting an association request frame to an AP and receiving an association response frame from the AP. The association request frame and the association response frame may include parameters for a second power save mode of the enhanced power save. The parameters may comprise at least one of: indication(s) of whether the STA and/or the AP support the second power save mode functionality, a parameter (N) indicating a number of successive beacon frames that the STA listens for when the second power save is triggered (or maintained), a parameter (K) indicating a start offset of a beacon interval in which the STA starts waking to listen for one or more successive beacon frames when the second power save mode is triggered (or maintained), a parameter indicating whether switching from the first power save mode to the second power save mode is triggered by receiving of at least one downlink BU of latency sensitive traffic.

Next, in step 2020, process 2000 may include the STA switching a power management mode from an active mode to a first power save mode of the enhanced power save mode. In the first power save mode, the STA listens for beacon frames based on a first listening pattern. The first listening pattern may comprise the STA waking to listen for beacon frames at least once during a listen interval of the STA.

Next, in step 2030, process 2000 may include the STA determining whether a received beacon frame includes a TIM bit associated with the STA set to 1. If the answer is no, process 2000 transitions to step 2060, which include maintaining the STA in the first power save mode, before return to step 2030. Otherwise, process 2000 transitions to step 2040, which includes transmitting a PS-Poll frame to the AP and receiving one or more DL BUs from the AP.

In an embodiment, after receiving the DL BUs in step 2040, process 2000 proceeds to step 2050, which includes switching the power management mode from the first power save mode to the second save mode. In the second power save mode, the STA listens for beacon frames based on a second listening pattern. The second listening pattern may be determined by the parameters for the second power save mode exchanged in the association request and response frames in step 2010.

In another embodiment, after receiving the DL BUs in step 2040, process 2000 proceeds to step 2070, which includes determining whether the DL BUs received in step 2040 include latency sensitive traffic. If the answer is no, process 2000 transitions to step 2060, which includes maintaining the STA in the first power save mode. Otherwise, process 2000 transitions to step 2050, which includes switching the power management mode from the first power save mode to the second power save mode.

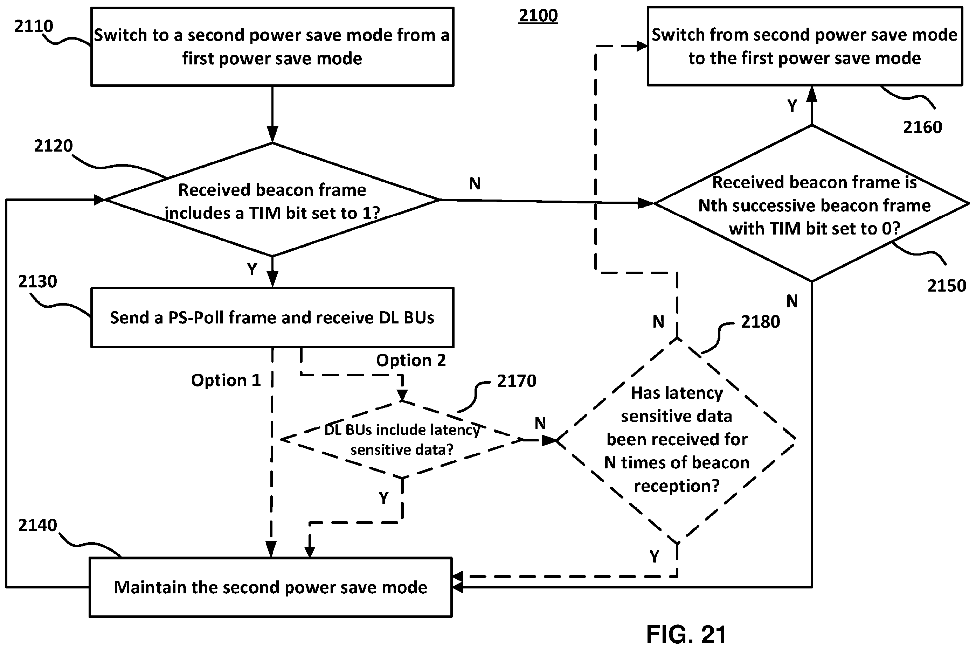

FIG. 21 illustrates an example process 2100 according to an embodiment. Example process 2100 is provided for the purpose of illustration only and is not limiting of embodiments. Example process 2100 may be performed by a STA capable of operating according to the enhanced power save mode as described herein.

Process 2100 begins in step 2110, which includes switching a power management mode from a first power save mode to a second power save mode of the enhanced power save mode. In the first power save mode, the STA listens for beacon frames based on a first listening pattern. The first listening pattern may comprise the STA waking to listen for beacon frames at least once during a listen interval of the STA. In the second power save mode, the STA listens for beacon frames based on a second listening pattern. The second listening pattern may be determined by parameters for the second power save mode exchanged in association request and response frames between the STA and AP.

Next, in step 2120, process 2100 may include determining whether a received beacon frame includes a TIM bit associated with the STA set to 1. If the answer is no, process 2100 transitions to step 2150, which includes determining whether the received beacon frame corresponds to an N-th successive beacon frame with the TIM bit associated with the STA set to 0. In an embodiment, the value of N corresponds to a parameter of the second power save mode that indicates a configured value for the STA for a number of successive beacon frames to listen for when the second power save is triggered (or maintained). If the answer is yes in step 2150, process 2100 transitions to step 2160, which includes switching the power management mode to the first power save mode. Otherwise, process 2100 proceeds to step 2140, which includes maintaining the STA in the second power save mode, before returning to step 2120.

If the answer is yes in step 2120, process 2100 transitions to step 2130, which includes transmitting a PS-Poll frame to the AP and receiving one or more DL BUs from the AP.

In an embodiment, after receiving the DL BUs in step 2130, process 2100 proceeds to step 2140, which includes maintaining the STA in the second power save mode, before returning to step 2120.

In another embodiment, after receiving the DL BUs in step 2130, process 2100 transitions to step 2170, which includes determining whether the DL BUs received in step 2130 include latency sensitive traffic. If the answer is yes, process 2100 transitions to step 2140, which includes maintaining the STA in the second power save mode, before returning to step 2120. Otherwise, process 2100 transitions to step 2180, which includes determining whether the STA has received at least one DL BU including latency sensitive traffic over the period of N consecutive received beacon frames (where N is the configured value for the STA for the number of successive beacon frames to listen for when the second power save is triggered (or maintained)). If the answer is no, process 2100 proceeds to step 2160, which includes switching from the second power save mode to the first power save. Otherwise, process 2100 transitions to step 2140, which includes maintaining the STA in the second power save mode, before returning to step 2120.

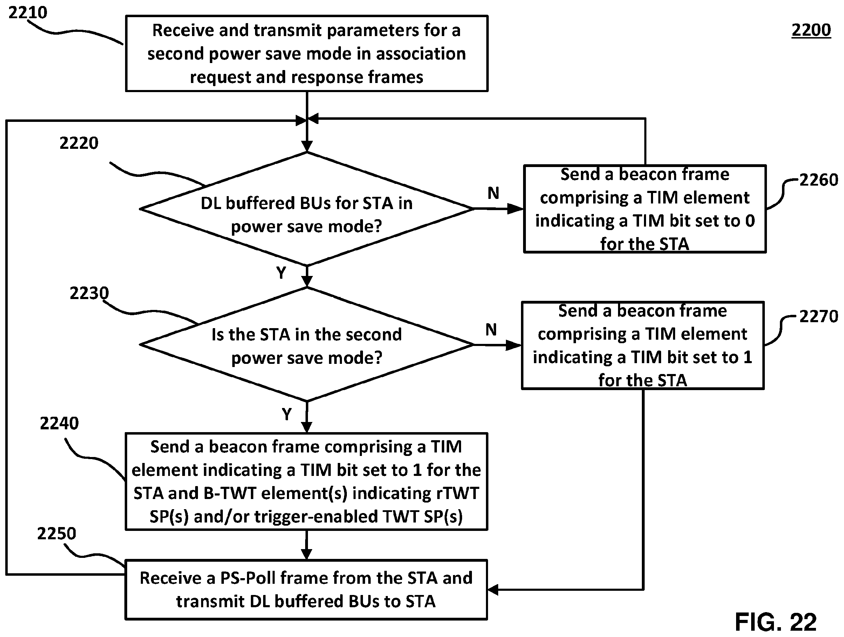

FIG. 22 illustrates an example process 2200 according to an embodiment. Example process 2200 is provided for the purpose of illustration only and is not limiting of embodiments. Example process 2200 may be performed by an AP capable of supporting an enhanced power save mode of an associated STA as described herein. The enhanced power save mode includes a first power save and a second power save as described herein.

Process 2200 may begin in step 2210, which includes the AP receiving an association request frame from the STA and transmitting an association response frame to the AP. The association request frame and the association response frame may include parameters for a second power save mode of the enhanced power save. The parameters may comprise at least one of: indication(s) of whether the STA and/or the AP support the second power save mode functionality, a parameter (N) indicating a number of successive beacon frames that the STA listens for when the second power save is triggered (or maintained), a parameter (K) indicating a start offset of a beacon interval in which the STA starts waking to listen for one or more successive beacon frames when the second power save mode is triggered (or maintained), a parameter indicating whether switching from the first power save mode to the second power save mode is triggered by the STA receiving of at least one downlink BU of latency sensitive traffic.

Next, in step 2220, process 2200 includes determining whether the AP has DL buffered BUs for the STA and that the STA is in power save mode at a target beacon transmission time (TBTT). If the answer is no, process 2200 transitions to step 2260, which includes sending a beacon frame comprising a TIM element with a TIM bit set to 0 for the STA, before returning to step 2220. Otherwise, if the answer is yes, process 2200 proceeds to step 2230, which include determining whether the STA is in the second power save of the enhanced power save mode.

If the answer is no in step 2230, process 2200 transitions to step 2270, which includes sending a beacon frame comprising a TIM element with a TIM bit set to 1 for the STA, and then to step 2250, which includes receiving a PS-Poll frame from the STA and transmitting DL buffered BUs to the STA. Otherwise, process 2100 proceeds to step 2240, which includes sending a beacon frame comprising a TIM element with a TIM bit set to 1 for the STA and one or more broadcast target wake time (TWT) element(s) indicating an r-TWT SP) and/or a TE TWT SP for the STA. The r-TWT SP and/or TE TWT SP may be scheduled to provide an uplink dedicated resource for uplink transmission by the STA. Process 2100 transitions to step 2250 following step 2240.

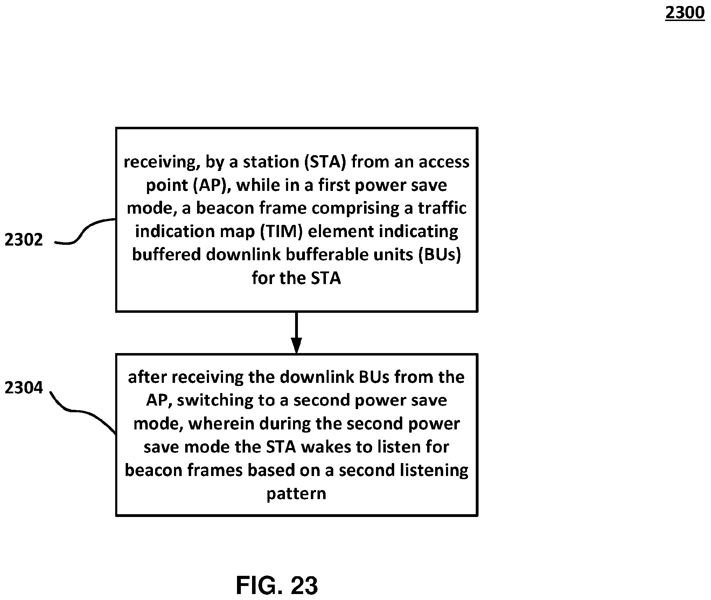

FIG. 23 illustrates an example process 2300 according to an embodiment. Example process 2300 is provided for the purpose of illustration only and is not limiting. Example process 2300 may be performed by a STA supporting an enhanced power save mode comprising a first power save mode and a second power save mode as described herein.

Process 2300 begins in step 2302, which includes receiving, by the STA from and AP, while in the first power save mode, a beacon frame comprising a TIM element indicating DL buffered BUs for the STA. In an embodiment, in the first power save mode, the STA listens for beacon frames based on a first listening pattern. The first listening pattern may comprise the STA waking to listen for beacon frames at least once during a listen interval of the STA.

Next, in step 2304, process 2300 includes, after receiving the downlink BUs from the AP, switching to the second power save mode. In an embodiment, during the second power save mode, the STA wakes to listen for beacon frames based on a second listening pattern. The second listening pattern may be determined by parameters exchanged in association request and response frames between the STA and the AP.

In an embodiment, according to the second listening pattern, the STA wakes a pre-determined number of times to listen for consecutive beacon frames. In an embodiment, the pre-determined number of times is pre-configured in the STA and the AP.

In an embodiment, according to the second listening pattern, the STA wakes to listen for consecutive beacon frames during a pre-determined interval. In an embodiment, the pre-determined interval is pre-configured in the STA and the AP. In an embodiment, the pre-determined interval is a number of beacon intervals or a number of listen intervals.

In an embodiment, process 2300 may further include transmitting, by the STA, a frame to the AP to retrieve the downlink BUs. The frame to retrieve the downlink BUs may comprises power save poll frame.

In an embodiment, process 2300 may further include, before step 2302, switching, by the STA, a power management mode of the STA from an active mode to the first power save mode. In an embodiment, process 2300 may further include receiving, from the AP, a frame comprising a power management (PM) subfield; and switching the power management from the active mode to the first power save mode based on the PM subfield.

In an embodiment, the switching to the second power save mode in step 2340 may comprise switching to the second power save mode based on the downlink BUs comprising at least one latency sensitive BU.

In an embodiment, process 2300 may further include, before step 2302, transmitting, by the STA to the AP, an association request frame comprising a first capability element; and receiving, by the STA from the AP, an association response frame comprising a second capability element.

In an embodiment, the first capability element comprises at least one of: a presence indication field indicating parameters present in the first capability element; a first capability support field indicating whether the STA supports an enhanced power save mode comprising the first power save mode and the second power save mode; a first parameter indicating a requested value of the STA for a number of successive beacon frames to listen for when the second power save mode is triggered; a second parameter indicating a requested value of the STA for a start offset of a beacon interval in which the STA starts waking to listen for one or more successive beacon frames when the second power save mode is triggered; and a third parameter indicating a preference of the STA about whether switching from the first power save mode to the second power save mode is triggered by receiving at least one downlink BU of latency sensitive traffic.

In an embodiment, the second capability element comprises at least one of: a presence indication field indicating parameters present in the second capability element; a second capability support field indicating whether the AP supports the enhanced power save mode comprising the first power save mode and the second power save mode; a fourth parameter indicating a configured value for the STA for the number of successive beacon frames to listen for when the second power save mode is triggered; a fifth parameter indicating a configured value for the STA for the start offset of the beacon interval in which the STA starts waking to listen for one or more successive beacon frames when the second power save mode is triggered; and a sixth parameter indicating whether switching from the first power save mode to the second power save mode of the STA is triggered by the STA receiving at least one downlink BU of latency sensitive traffic.

In an embodiment, the second listening pattern of the second power save mode is configured by the fourth parameter and the fifth parameter of the second capability element.

In an embodiment, process 2300 may further comprise receiving, while in the second power save mode, a beacon frame comprising a TIM element indicating downlink BUs of latency sensitive traffic for the STA and a broadcast target wake time (TWT) element. The broadcast TWT element may indicate at least one of an r-TWT SP or a TE TWT SP.

In an embodiment, process 2300 may further comprise, after step 2304, receiving, by the STA, while in the second power save mode, at least one beacon frame comprising a TIM element; and in response to the TIM element of each of the at least one beacon frame indicating no downlink BUs for the STA, switching the power management mode of the STA from the second power save mode to the first power save mode.

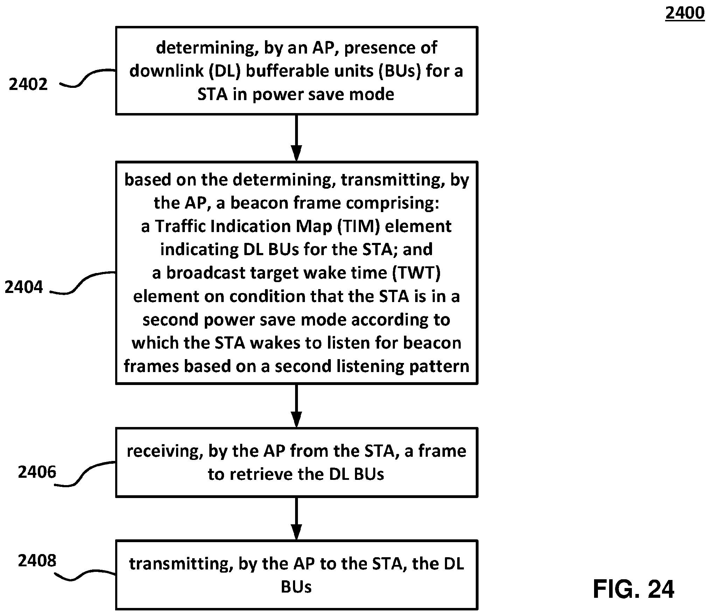

FIG. 24 illustrates an example process 2400 according to an embodiment. Example process 2400 is provided for the purpose of illustration only and is not limiting of embodiments. Example process 2400 may be performed by an AP capable of supporting an enhanced power save mode of an associated STA as described herein. The enhanced power save mode includes a first power save and a second power save as described herein.

Process 2400 begins in step 2402, which includes determining, by the AP, presence of buffered DL BUs for a STA in power save mode.

Next, in step 2404, process 2400 includes based on the determining, transmitting, by the AP, a beacon frame comprising: a TIM element indicating DL BUs for the STA; and a broadcast TWT element on condition that the STA is in the second power save mode of the enhanced power save mode. In an embodiment, during the second power save mode, the STA wakes to listen for beacon frames based on a second listening pattern. The second listening pattern may be determined by parameters exchanged in association request and response frames between the STA and the AP.

In an embodiment, according to the second listening pattern, the STA wakes a pre-determined number of times to listen for consecutive beacon frames. In an embodiment, the pre-determined number of times is pre-configured in the STA and the AP.

In an embodiment, according to the second listening pattern, the STA wakes to listen for consecutive beacon frames during a pre-determined interval. In an embodiment, the pre-determined interval is pre-configured in the STA and the AP. In an embodiment, the pre-determined interval is a number of beacon intervals or a number of listen intervals.

In an embodiment, the broadcast TWT element indicates at least one of an r-TWT SP or a TE TWT SP.

Next, in step 2406, process 2400 includes receiving, by the AP from the STA, a frame to retrieve the DL BUs. In an embodiment, the frame to retrieve the downlink BUs comprises a power save poll frame.

Next, in step 2408, process 2400 includes transmitting, by the AP to the STA, the DL BUs. In an embodiment, where the STA is in the second power save made, transmitting the DL BUs may comprise transmitting the DL BUs during the r-TWT SP or TE TWT SP indicated in the beacon frame.

In an embodiment, process 2400 may further include, before step 2402, receiving, by the AP from the STA, an association request frame comprising a first capability element; and transmitting, by the AP to the STA, an association response frame comprising a second capability element.

In an embodiment, the first capability element comprises at least one of: a presence indication field indicating parameters present in the first capability element; a first capability support field indicating whether the STA supports an enhanced power save mode comprising the first power save mode and the second power save mode; a first parameter indicating a requested value of the STA for a number of successive beacon frames to listen for when the second power save mode is triggered; a second parameter indicating a requested value of the STA for a start offset of a beacon interval in which the STA starts waking to listen for one or more successive beacon frames when the second power save mode is triggered; and a third parameter indicating a preference of the STA about whether switching from the first power save mode to the second power save mode is triggered by receiving at least one downlink BU of latency sensitive traffic.

In an embodiment, the second capability element comprises at least one of: a presence indication field indicating parameters present in the second capability element; a second capability support field indicating whether the AP supports the enhanced power save mode comprising the first power save mode and the second power save mode; a fourth parameter indicating a configured value for the STA for the number of successive beacon frames to listen for when the second power save mode is triggered; a fifth parameter indicating a configured value for the STA for the start offset of the beacon interval in which the STA starts waking to listen for one or more successive beacon frames when the second power save mode is triggered; and a sixth parameter indicating whether switching from the first power save mode to the second power save mode of the STA is triggered by the STA receiving at least one downlink BU of latency sensitive traffic.

In an embodiment, the second listening pattern of the second power save mode is configured by the fourth parameter and the fifth parameter of the second capability element.

## Claims

1. A method comprising:
receiving, by a station, STA (210), from an access point, AP (260), while in a first power save mode, a beacon frame comprising a traffic indication map, TIM, element indicating downlink bufferable units, BUs, for the STA, wherein during the first power save mode the STA wakes to listen for beacon frames based on a first listening pattern; and
after receiving the downlink BUs from the AP, switching to a second power save mode, wherein during the second power save mode the STA wakes to listen for beacon frames based on a second listening pattern; **characterized by**
transmitting, by the STA to the AP, an association request frame comprising a first capability element (1502); and
receiving, by the STA from the AP, an association response frame comprising a second capability element (1504).

2. The method of claim 1, wherein, according to the first listening pattern, the STA wakes to listen for beacon frames at least once during a listen interval.

3. The method of any of claims 1-2, wherein, according to the second listening pattern, the STA wakes a pre-determined number of times to listen for consecutive beacon frames.

4. The method of claim 3, wherein the pre-determined number of times is pre-configured in the STA and the AP.

5. The method of any of claims 1-2, wherein, according to the second listening pattern, the STA wakes to listen for consecutive beacon frames during a pre-determined interval.

6. The method of claim 5, wherein the pre-determined interval is pre-configured in the STA and the AP.

7. The method of claim 5, wherein the pre-determined interval is a number of beacon intervals or a number of listen intervals.

8. The method of any of claims 1-7, further comprising switching, by the STA, a power management mode of the STA from an active mode to the first power save mode.

9. The method of any of claims 1-8, wherein switching to the second power save mode comprises switching to the second power save mode based on the downlink BUs comprising at least one latency sensitive BU.

10. The method of any of claims 1-9, wherein the first capability element comprises at least one of:
a presence indication field indicating parameters present in the first capability element;
a first capability support field indicating whether the STA supports an enhanced power save mode comprising the first power save mode and the second power save mode;
a first parameter indicating a requested value of the STA for a number of successive beacon frames to listen for when the second power save mode is triggered;
a second parameter indicating a requested value of the STA for a start offset of a beacon interval in which the STA starts waking to listen for one or more successive beacon frames when the second power save mode is triggered; and
a third parameter indicating a preference of the STA about whether switching from the first power save mode to the second power save mode is triggered by receiving at least one downlink BU of latency sensitive traffic.

11. The method of claim 10, wherein the second capability element comprises at least one of:
a presence indication field indicating parameters present in the second capability element;
a second capability support field indicating whether the AP supports the enhanced power save mode comprising the first power save mode and the second power save mode;
a fourth parameter indicating a configured value for the STA for the number of successive beacon frames to listen for when the second power save mode is triggered;
a fifth parameter indicating a configured value for the STA for the start offset of the beacon interval in which the STA starts waking to listen for one or more successive beacon frames when the second power save mode is triggered; and
a sixth parameter indicating whether switching from the first power save mode to the second power save mode of the STA is triggered by the STA receiving at least one downlink BU of latency sensitive traffic.

12. The method of claim 11, wherein the second listening pattern is configured by the fourth parameter and the fifth parameter of the second capability element.

13. The method of any of claims 1-12, further comprising receiving, while in the second power save mode, a beacon frame comprising a TIM element indicating downlink BUs of latency sensitive traffic for the STA and a broadcast target wake time, TWT, element.

14. A station, STA (210), comprising:
one or more processors; and
memory storing instructions that, when executed by the one or more processors, cause the STA to perform a method according to any of claims 1-13.

15. A computer-readable medium comprising instructions that, when executed by one or more processors of a station, STA (210), cause the STA to perform a method according to any of claims 1-13.

## Patentansprüche

1. Verfahren, umfassend:
Empfangen eines Beacon-Frames, umfassend ein Traffic-Indication-Map-Element, TIM-Element, das downlink pufferbare Einheiten, BUs, für eine Station, STA, (210) angibt, von einem Zugangspunkt, AP, (260) durch die STA in einem ersten Energiesparmodus, wobei die STA während des ersten Energiesparmodus aufwacht, um basierend auf einem ersten Horchmuster auf Beacon-Frames zu horchen;
Schalten in einen zweiten Energiesparmodus nach Empfangem der Downlink-BUs von dem AP, wobei die STA während des zweiten Energiesparmodus aufwacht, um basierend auf einem zweiten Horchmuster auf Beacon-Frames zu horchen;
**gekennzeichnet durch**
Übertragen eines Zuordnungsanforderungs-Frames, umfassend ein erstes Fähigkeitselement (1502), durch die STA an den AP; und
Empfangen eines Zuordnungsantwort-Frames, umfassend ein zweites Fähigkeitselement (1504), durch die STA von der AP.

2. Verfahren nach Anspruch 1, wobei die STA gemäß dem ersten Horchmuster mindestens einmal während eines Horchintervalls aufwacht, um auf Beacon-Frames zu horchen.

3. Verfahren nach einem der Ansprüche 1 bis 2, wobei die STA gemäß dem zweiten Horchmuster eine vorbestimmte Anzahl von Malen aufwacht, um auf aufeinanderfolgende Beacon-Frames zu horchen.

4. Verfahren nach Anspruch 3, wobei die vorbestimmte Anzahl von Malen in der STA und dem AP vorkonfiguriert ist.

5. Verfahren nach einem der Ansprüche 1 bis 2, wobei die STA gemäß dem zweiten Horchmuster aufwacht, um während eines vorbestimmten Intervalls auf aufeinanderfolgende Beacon-Frames zu horchen.

6. Verfahren nach Anspruch 5, wobei das vorbestimmte Intervall in der STA und dem AP vorkonfiguriert ist.

7. Verfahren nach Anspruch 5, wobei das vorbestimmte Intervall eine Anzahl von Beacon-Intervallen oder eine Anzahl von Horchintervallen ist.

8. Verfahren nach einem der Ansprüche 1 bis 7, ferner umfassend Schalten eines Energiemanagementmodus der STA von einem aktiven Modus in den ersten Energiesparmodus durch die STA.

9. Verfahren nach einem der Ansprüche 1 bis 8, wobei Schalten in den zweiten Energiesparmodus Schalten in den zweiten Energiesparmodus basierend auf den Downlink-BUs, umfassend mindestens eine latenzempfindliche BU, umfasst.

10. Verfahren nach einem der Ansprüche 1 bis 9, wobei das erste Fähigkeitselement mindestens eines von Folgenden umfasst:
ein Vorhandenseinangabefeld, das in dem ersten Fähigkeitselement vorhandene Parameter angibt;
ein Unterstützungsfeld der ersten Fähigkeit, das angibt, ob die STA einen erweiterten Energiesparmodus, umfassend den ersten Energiesparmodus und den zweiten Energiesparmodus, unterstützt;
einen ersten Parameter, der einen angeforderten Wert der STA für eine Anzahl von aufeinanderfolgenden Beacon-Frames angibt, auf die zu horchen ist, wenn der zweite Energiesparmodus ausgelöst ist;
einen zweiten Parameter, der einen angeforderten Wert der STA für einen Start-Offset eines Beacon-Intervalls angibt, in dem die STA beginnt, aufzuwachen, um auf einen oder mehrere aufeinanderfolgende Beacon-Frames zu horchen, wenn der zweite Energiesparmodus ausgelöst ist; und
einen dritten Parameter, der eine Präferenz der STA dahingehend angibt, ob ein Schalten von dem ersten Energiesparmodus in den zweiten Energiesparmodus durch Empfangen mindestens einer Downlink-BU latenzempfindlichen Verkehrs ausgelöst wird.

11. Verfahren nach Anspruch 10, wobei das zweite Fähigkeitselement mindestens eines von Folgenden umfasst:
ein Vorhandenseinangabefeld, das die in dem zweiten Fähigkeitselement vorhandenen Parameter angibt;
ein Unterstützungsfeld der zweiten Fähigkeit, das angibt, ob der AP den erweiterten Energiesparmodus, umfassend den ersten Energiesparmodus und den zweiten Energiesparmodus, unterstützt;
einen vierten Parameter, der einen konfigurierten Wert für die STA für die Anzahl aufeinanderfolgender Beacon-Frames angibt, auf die zu horchen ist, wenn der zweite Energiesparmodus ausgelöst ist;
einen fünften Parameter, der einen konfigurierten Wert für die STA für den Start-Offset des Beacon-Intervalls angibt, in dem die STA beginnt, aufzuwachen, um auf einen oder mehrere aufeinanderfolgende Beacon-Frames zu horchen, wenn der zweite Energiesparmodus ausgelöst ist; und
einen sechsten Parameter, der angibt, ob ein Schalten von dem ersten Energiesparmodus in den zweiten Energiesparmodus der STA durch Empfangen mindestens einer Downlink-BU latenzempfindlichen Verkehrs durch die STA ausgelöst wird.

12. Verfahren nach Anspruch 11, wobei das zweite Horchmuster durch den vierten Parameter und den fünften Parameter des zweiten Fähigkeitselements konfiguriert wird.

13. Verfahren nach einem der Ansprüche 1 bis 12, ferner umfassend Empfangen eines Beacon-Frames, umfassend ein TIM-Element, das Downlink-BUs latenzempfindlichen Verkehrs für die STA angibt, und ein Broadcast-Target-Wake-Time-Element, TWT-Element, in dem zweiten Energiesparmodus.

14. Station, STA, (210), umfassend:
einen oder mehrere Prozessoren; und
Speicher, der Anweisungen speichert, die beim Ausführen durch den einen oder die mehreren Prozessoren die STA zum Durchführen eines Verfahrens nach einem der Ansprüche 1 bis 13 veranlassen.

15. Computerlesbares Medium, umfassend Anweisungen, die beim Ausführen durch einen oder mehrere Prozessoren einer Station, STA, (210) die STA zum Durchführen eines Verfahrens nach einem der Ansprüche 1 bis 13 veranlassen.

## Revendications

1. Procédé comprenant :
la réception, par une station, STA (210), depuis un point d'accès, AP (260), tout en étant dans un premier mode d'économie d'énergie, d'une trame de balise comprenant un élément de carte d'indication de trafic, TIM, indiquant des unités pouvant être mises en mémoire tampon de liaison descendante, BU, pour la STA, dans lequel, pendant le premier mode d'économie d'énergie, la STA se réveille pour écouter des trames de balise sur la base d'un premier motif d'écoute ;
après la réception des BU de liaison descendante depuis l'AP, le passage à un second mode d'économie d'énergie, dans lequel, pendant le second mode d'économie d'énergie, la STA se réveille pour écouter des trames de balise sur la base d'un second motif d'écoute ;
**caractérisé par** la transmission, par la STA à l'AP, d'une trame de demande d'association comprenant un premier élément de capacité (1502) ; et la réception, par la STA depuis l'AP, d'une trame de réponse d'association comprenant un second élément de capacité (1504).

2. Procédé selon la revendication 1, dans lequel, selon le premier motif d'écoute, la STA se réveille pour écouter des trames de balise au moins une fois pendant un intervalle d'écoute.

3. Procédé selon l'une quelconque des revendications 1 et 2, dans lequel, selon le second motif d'écoute, la STA se réveille un nombre prédéterminé de fois pour écouter des trames de balise consécutives.

4. Procédé selon la revendication 3, dans lequel le nombre prédéterminé de fois est préconfiguré dans la STA et l'AP.

5. Procédé selon l'une quelconque des revendications 1 et 2, dans lequel, selon le second motif d'écoute, la STA se réveille pour écouter des trames de balise consécutives pendant un intervalle prédéterminé.

6. Procédé selon la revendication 5, dans lequel l'intervalle prédéterminé est préconfiguré dans la STA et l'AP.

7. Procédé selon la revendication 5, dans lequel l'intervalle prédéterminé est un nombre d'intervalles de balise ou un nombre d'intervalles d'écoute.

8. Procédé selon l'une quelconque des revendications 1 à 7, comprenant en outre la commutation, par la STA, d'un mode de gestion d'énergie de la STA d'un mode actif vers le premier mode d'économie d'énergie.

9. Procédé selon l'une quelconque des revendications 1 à 8, dans lequel le passage au second mode d'économie d'énergie comprend le passage au second mode d'économie d'énergie sur la base du fait que les BU de liaison descendante comprennent au moins une BU sensible à la latence.

10. Procédé selon l'une quelconque des revendications 1 à 9, dans lequel le premier élément de capacité comprend au moins l'un parmi :
un champ d'indication de présence indiquant des paramètres présents dans le premier élément de capacité ;
un premier champ de prise en charge de capacité indiquant si la STA prend en charge un mode d'économie d'énergie amélioré comprenant le premier mode d'économie d'énergie et le second mode d'économie d'énergie ;
un premier paramètre indiquant une valeur demandée de la STA pour un nombre de trames de balise successives à écouter lorsque le second mode d'économie d'énergie est déclenché ;
un deuxième paramètre indiquant une valeur demandée de la STA pour un décalage de début d'un intervalle de balise dans lequel la STA commence à se réveiller pour écouter une ou plusieurs trames de balise successives lorsque le second mode d'économie d'énergie est déclenché ; et
un troisième paramètre indiquant une préférence de la STA concernant le fait que le passage du premier mode d'économie d'énergie au second mode d'économie d'énergie est déclenché ou non par la réception d'au moins une BU de liaison descendante de trafic sensible à la latence.

11. Procédé selon la revendication 10, dans lequel le second élément de capacité comprend au moins l'un parmi :
un champ d'indication de présence indiquant des paramètres présents dans le second élément de capacité ;
un second champ de prise en charge de capacité indiquant si l'AP prend en charge le mode d'économie d'énergie amélioré comprenant le premier mode d'économie d'énergie et le second mode d'économie d'énergie ;
un quatrième paramètre indiquant une valeur configurée pour la STA pour le nombre de trames de balise successives à écouter lorsque le second mode d'économie d'énergie est déclenché ;
un cinquième paramètre indiquant une valeur configurée pour la STA pour le décalage de début de l'intervalle de balise dans lequel la STA commence à se réveiller pour écouter une ou plusieurs trames de balise successives lorsque le second mode d'économie d'énergie est déclenché ; et
un sixième paramètre indiquant si le passage du premier mode d'économie d'énergie au second mode d'économie d'énergie de la STA est déclenché par la réception par la STA d'au moins une BU de liaison descendante de trafic sensible à la latence.

12. Procédé selon la revendication 11, dans lequel le second motif d'écoute est configuré par le quatrième paramètre et le cinquième paramètre du second élément de capacité.

13. Procédé selon l'une quelconque des revendications 1 à 12, comprenant en outre la réception, tout en étant dans le second mode d'économie d'énergie, d'une trame de balise comprenant un élément TIM indiquant des BU de liaison descendante de trafic sensible à la latence pour la STA et un élément de temps de réveil cible, TWT, de diffusion.

14. Station, STA (210), comprenant :
un ou plusieurs processeurs ; et
une mémoire stockant des instructions qui, lorsqu'elles sont exécutées par les un ou plusieurs processeurs, amènent la STA à réaliser un procédé selon l'une quelconque des revendications 1 à 13.

15. Support lisible par ordinateur comprenant des instructions qui, lorsqu'elles sont exécutées par un ou plusieurs processeurs d'une station, STA (210), amènent la STA à réaliser un procédé selon l'une quelconque des revendications 1 à 13.
